(19) Europäisches Patentamt
European Patent Office
Office européen des brevets

(11) EP 1 743 877 B1

# (12) EUROPEAN PATENT SPECIFICATION

(45) Date of publication and mention of the grant of the patent:
**13.03.2013 Bulletin 2013/11**

(51) Int Cl.:
***C04B 24/24*** *(2006.01)* ***C04B 24/26*** *(2006.01)*
***C04B 40/00*** *(2006.01)* ***C04B 28/02*** *(2006.01)*

(21) Application number: **06012447.6**

(22) Date of filing: **16.06.2006**

## (54) Dispersant for hydraulic composition

Dispergiermittel für hydraulische Zusammensetzung

Dispersant pour composition hydraulique

(84) Designated Contracting States:
**DE ES FR GB IT**

(30) Priority: **16.06.2005 JP 2005176380**
**16.01.2006 JP 2006007758**

(43) Date of publication of application:
**17.01.2007 Bulletin 2007/03**

(73) Proprietor: **Kao Corporation**
**Chuo-ku**
**Tokyo (JP)**

(72) Inventors:
- **Taniguchi, Takao**
**Wakayama-shi**
**Wakayama (JP)**
- **Shimoda, Masaaki**
**Wakayama-shi**
**Wakayama (JP)**
- **Hamada, Daisuke**
**Wakayama-shi**
**Wakayama (JP)**
- **Hamai, Toshimasa**
**Wakayama-shi**
**Wakayama (JP)**
- **Yamato, Fujio**
**Wakayama-shi**
**Wakayama (JP)**
- **Sato, Takahiro**
**Wakayama-shi**
**Wakayama (JP)**

(74) Representative: **HOFFMANN EITLE**
**Patent- und Rechtsanwälte**
**Arabellastrasse 4**
**81925 München (DE)**

(56) References cited:
**WO-A-01/58579**

- **PATENT ABSTRACTS OF JAPAN vol. 2000, no. 14, 5 March 2001 (2001-03-05) & JP 2000 327386 A (TAIHEIYO CEMENT CORP), 28 November 2000 (2000-11-28)**
- **PATENT ABSTRACTS OF JAPAN vol. 1999, no. 08, 30 June 1999 (1999-06-30) & JP 11 079811 A (KAO CORP), 23 March 1999 (1999-03-23)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 743 877 B1

## Description

### Field of the invention

The present invention relates to a hydraulic composition dispersant and to a hydraulic composition containing the dispersant.

### Related arts

There has been a recent trend to a further improvement in the durability of concretes which are typical hydraulic compositions. Such an improvement in the durability of concretes is made basically by reducing the ratio of water used for concrete to cement (water-cement ratio) from the viewpoint of formulation of concrete. When the water-cement ratio is reduced, the viscosity of the resulting hydraulic composition tends to increase, leading to inferior workability. Also, a polycarboxylic acid-based cement dispersant has been proposed that has high dispersibility and superior viscosity reducing ability even in a highly reduced water area.

Generally, a polycarboxylic acid-based dispersant has temperature dependency to develop a dispersing effect and the fluidity of an obtained hydraulic composition tends to increase with time because of a reduction in the absorption rate to a hydraulic powder at lower temperatures in, for example, the winter season. This tendency is exhibited more easily with a reduction in the water-cement ratio, a reduction in unit water amount and a reduction in stirring time and there is the case where this causes such a trouble that a coarse aggregate is separated. In the production of ready-mixed concrete, a variation in initial fluidity and maintainability of fluidity according to a variation in temperature is one of problems concerning control of fluidity.

In JP-A 2005-118684, a cement admixture is disclosed which is superior in, for example, high dispersibility and reduction in viscosity in the range of a highly reduced water ratio. In JP-A 2004-168635, a hydraulic composition dispersant is disclosed which has a low mortar viscosity and is superior in the stability of fluidity as a function of a variation in the temperature of concrete even in a low water/hydraulic powder ratio. In JP-A 2001-316151, a cement dispersant composition is disclosed which enables the kneading of concrete to be finished by stirring in a short time and concrete having high workability can be obtained without damaging to fluidity retainability even in a variety of concrete production conditions.

In JP-A 11-79811, a concrete admixture is disclosed which contains, as an essential component, a copolymer obtained by polymerizing a monomer having a sulfonic acid group or a phosphoric acid group, a monomer having an oxyalkylene group and a monomer having a carboxylic acid group. It is also disclosed that a low viscosity, high initial fluidity and high fluidity maintainability can be obtained by compounding a high-performance water reducing agent.

JP-A 2000-327386 discloses a dispersant which comprises a copolymer obtained from a monomer having at least one phosphoric acid group expressed by the following formula

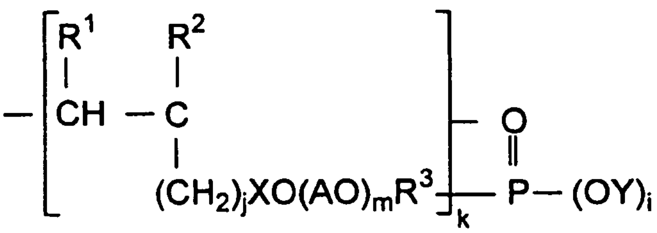

and a comonomer having a polyoxyalkylene group expressed by the formula

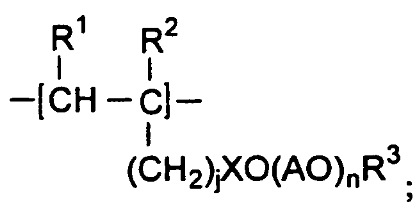

wherein R1 to R3 are each H, C1-C3 alkyl, COOH or CH2COOH; X is CO or CH2; AO is C2-C4 oxyalkylene; Y is H, an alkali or alkaline earth metal, ammonium, an alkylammonium or a C1-C3 alkyl; (j) is 0-2; (k) is 1 or 2; (m) is 0-5; (n) is 5-200 and (i) is 3-(k).

Summary of the invention

The present invention relates to a hydraulic composition dispersant containing a polycarboxylic acid-based polymer A having a carboxylic acid group and a group selected from an oxyalkylene group and/or an oxystyrene group; and a polymer B obtained by copolymerizing a monomer 1 represented by the following formula (1), a monomer 3 represented by the following formula (3) and a monomer 4 represented by the following formula (4).

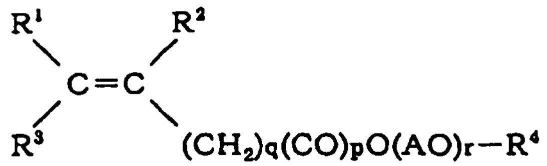
(1)

wherein $R^1$ and $R^2$ respectively represent a hydrogen atom or a methyl group, $R^3$ represents a hydrogen atom or -$(CH_2)_q(CO)_pO\ (AO)_rR^4$ where AO represents an oxyalkylene group having 2 to 4 carbon atoms or an oxystyrene group, p denotes a number 0 or 1, q denotes a number of 0 to 2, r denotes an average number of the total AO units and denotes a number of 3 to 300 and $R^4$ represents a hydrogen atom or an alkyl group having 1 to 18 carbon atoms.

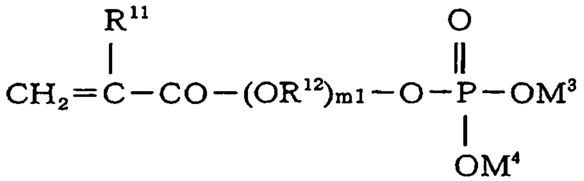
(3)

wherein $R^{11}$ represents a hydrogen atom or a methyl group, $R^{12}$ represents an alkylene group having 2 to 12 carbon atoms, m1 denotes a number of 1 to 30, $M^3$ and $M^4$ respectively represent a hydrogen atom, an alkali metal or an alkali earth metal.

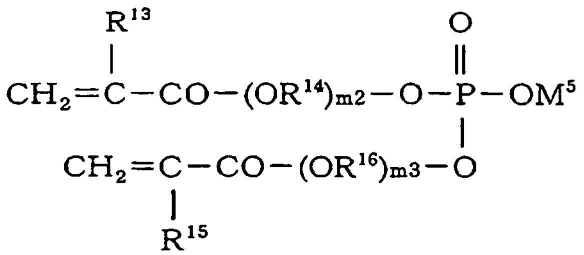
(4)

wherein $R^{13}$ and $R^{15}$ respectively represent a hydrogen atom or a methyl group, $R^{14}$ and $R^{16}$ respectively represent an alkylene group having 2 to 12 carbon atoms, m2 and m3 respectively denote a number of 1 to 30 and $M^5$ represents a hydrogen atom, an alkali metal or an alkali earth metal.

Also, the present invention relates to a hydraulic composition containing water, a hydraulic powder and the above hydraulic composition dispersant of the present invention and a method of producing a concrete product containing the hydraulic composition, and particularly to a method of producing a concrete product including filling the hydraulic composition in a form, molding the composition and then releasing the concrete product from the form.

Also, the present invention provides use of the above dispersant for a hydraulic composition dispersant.

Detailed description of the invention

However, the technologies described in each publication of JP-A Nos. 2005-118684, 2004-168635, 2001-316151 and 11-79811 are limited in viscosity reducing effect and a dispersant having a higher viscosity reducing effect is desired.

The present invention provides a dispersant that has a low viscosity and enables the preparation of a hydraulic composition having a small variation in fluidity as a function of a variation in temperature and also provides a hydraulic composition superior in workability.

According to the present invention, a dispersant that has a low viscosity and enables the preparation of a hydraulic composition having a small variation in fluidity as a function of a variation in temperature and also a hydraulic composition superior in workability are provided. Also, a concrete product containing the hydraulic composition is superior in the surface appearance of concrete.

The inventors of the present invention have found that a hydraulic composition that has a low viscosity and exhibits a smaller variation in fluidity as a function of a variation in temperature can be obtained if the dispersant to be used in the composition is constituted by compounding a specific phosphoric acid-based polymer, to complete the present invention.

The present invention relates to a hydraulic composition dispersant preferably containing a polymer A' obtained by copolymerizing a monomer 1 represented by the following formula (1) with a monomer 2 represented by the following formula (2), and a polymer B obtained by copolymerizing a monomer (1) represented by the following formula (1), a monomer 3 represented by the following formula (3) and a monomer 4 represented by the following formula (4).

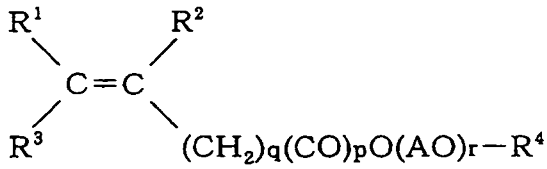 (1)

wherein $R^1$ and $R^2$ respectively represent a hydrogen atom or a methyl group, $R^3$ represents a hydrogen atom or -$(CH_2)_q(CO)_pO(AO)_rR^4$ where AO represents an oxyalkylene group having 2 to 4 carbon atoms or an oxystyrene group, p denotes a number of 0 or 1, q denotes a number of 0 to 2, r denotes an average number of the total AO units and denotes a number of 3 to 300 and $R^4$ represents a hydrogen atom or an alkyl group having 1 to 18 carbon atoms.

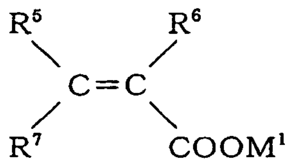 (2)

wherein $R^5$ to $R^7$ respectively represent a hydrogen atom, a methyl group or $(CH_2)_5COOM^2$ which may be combined with $COOM^1$ or other $(CH_2)_5COOM^2$ to form an anhydride and in this case, $M^1$ and $M^2$ in these groups are not present, s denotes a number of 0 to 2 and $M^1$ and $M^2$ respectively represent a hydrogen atom, an alkali metal, an alkali earth metal, an ammonium group, an alkylammonium group, a substituted alkylammonium group, an alkyl group, a hydroxyalkyl group or an alkenyl group.

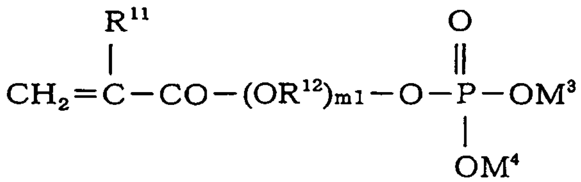 (3)

wherein $R^{11}$ represents a hydrogen atom or a methyl group, $R^{12}$ represents an alkylene group having 2 to 12 carbon atoms, m1 denotes a number of 1 to 30, $M^3$ and $M^4$ respectively represent a hydrogen atom, an alkali metal or an alkali earth metal.

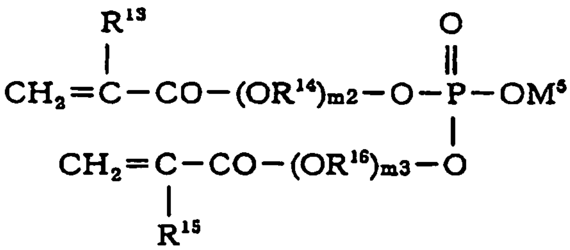 (4)

wherein $R^{13}$ and $R^{15}$ respectively represent a hydrogen atom or a methyl group, $R^{14}$ and $R^{16}$ respectively represent an alkylene group having 2 to 12 carbon atoms, m2 and m3 respectively denote a number of 1 to 30 and $M^5$ represents a hydrogen atom, an alkali metal or an alkali earth metal.

The hydraulic composition dispersant of the present invention contains the polymer A and the polymer B. The polymer A is a polycarboxylic acid-based polymer having a carboxylic acid group and a group selected from an oxyalkylene group and/or an oxystyrene group. The oxyalkylene group in the polymer A constitutes a polymer and has a polyalkylene glycol skeleton. The polymer A preferably contains an oxyalkylene group. The average mole number of added oxyalkylene groups is preferably 3 to 300 and more preferably 5 to 120. The oxyalkylene group is preferably an oxyalkylene group having 2 to 4 carbon atoms and more preferably contains an ethyleneoxy group (hereinafter, referred to as an EO group) wherein the amount of the EO group is preferably 70 mol% or more, more preferably 80 mol% or more and even more preferably 90 mol% or more. It is even more preferable that AO be all EO groups. The oxyalkylene group may be those containing different types of oxyalkylene group obtained by random addition, block addition or mixture of these additions in the repeat units of an oxyalkylene group. The oxyalkylene group may contain a propyleneoxy group besides the EO group.

The polymer is preferably a polymer A' (hereinafter, referred to as a polymer A') obtained by copolymerizing a monomer 1 represented by the following formula (1) with a monomer 2 represented by the following formula (2).

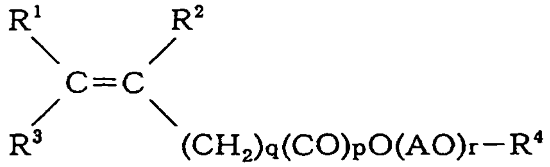 (1)

wherein $R^1$ and $R^2$ respectively represent a hydrogen atom or a methyl group, $R^3$ represents a hydrogen atom or -$(CH_2)_q(CO)_pO(AO)_rR^4$ where AO represents an oxyalkylene group having 2 to 4 carbon atoms or an oxystyrene group, p denotes a number of 0 or 1, q denotes a number of 0 to 2, r denotes an average number of the total AO units and denotes a number of 3 to 300 and $R^4$ represents a hydrogen atom or an alkyl group having 1 to 18 carbon atoms.

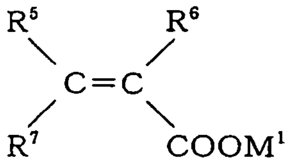 (2)

wherein $R^5$ to $R^7$ respectively represent a hydrogen atom, a methyl group or $(CH_2)_5COOM^2$ which may be combined with $COOM^1$ or other $(CH_2)_5COOM^2$ to form an anhydride and in this case, $M^1$ and $M^2$ in these groups are not present, s denotes a number of 0 to 2 and $M^1$ and $M^2$ respectively represent a hydrogen atom, an alkali metal, an alkali earth metal, an ammonium group, an alkylammonium group, a substituted alkylammonium group, an alkyl group, a hydroxyalkyl group or an alkenyl group.

(Monomer 1)

In the monomer 1, $R^1$ and $R^2$ in the formula (1) respectively represent a hydrogen atom or a methyl group. $R^3$ represents a hydrogen atom or - $(CH_2)_q(CO)_pO(AO)_rR^4$ and is preferably a hydrogen atom. Examples of the alkenyl $[(R^1)(R^3)C=C(R^2)-(CH_2)_q-]$ include a vinyl group, aryl group and methallyl group. AO is bound with $(CH_2)_q$ by an ether bond when p is 0 and by an ester bond when p is 1. q denotes a number of 0 to 2, preferably 0 or 1 and more preferably 0. AO is an oxyalkylene group having 2 to 4 carbon atoms or an oxystyrene group. AO is preferably an oxyalkylene group having 2 to 4 carbon atoms and more preferably contains an ethyleneoxy group wherein the amount of the EO group is preferably 70 mol% or more, more preferably 80 mol% or more and even more preferably 90 mol% or more. It is even more preferable that AO be all EO groups. r denotes an average number of the total AO units and denotes a number of 3 to 300 and preferably 5 to 120. The oxyalkylene group may be those containing different types of AO obtained by random addition, block addition or mixture of these additions in average r repeat units. The AO may contain a propylene oxy group besides the EO group. The monomer 1 is preferably a compound obtained when p = 1 and q = 0. Also, when p = 0, it is preferable that q = 1.

In order to make the polymer A' develop the initial strength and fluidity of concrete, r in the formula (1) is preferably 50 to 300 and more preferably 110 to 300. From the viewpoint of polymerizing ability, r is preferably 200 or

less, more preferably 150 or less and even more preferably 130 or less. Therefore, from the overall point of view, r is preferably 110 to 200, more preferably 110 to 150 and even more preferably 110 to 130. r is the formula (1) is preferably 3 to 100 and more preferably 3 to 50 from the viewpoint of reduction in concrete viscosity.

$R^4$ represents a hydrogen atom or an alkyl group having 1 to 18 carbon atoms, preferably an alkyl group having 1 to 12, preferably 1 to 4 and more preferably 1 or 2 carbon atoms and is even more preferably a methyl group.

As the monomer 1 are preferably used an esterified compound or a half esterified compound of a one-terminal alkyl-sealed polyalkylene glycol such as methoxypolyethylene glycol, methoxypolypropylene glycol, methoxypolybutylene glycol, methoxypolystyrene glycol or ethoxypolyethylene polypropylene glycol with (meth) acrylic acids or maleic acids, etherified compounds of these glycols with (meth)allyl alcohols and adducts obtained by adding alkylene oxides having 2 to 4 carbon atoms to (meth) acrylic acid, maleic acid or (meth) allyl alcohol.

Alkoxy compounds, especially, esterified compounds of methoxypolyethylene glycol and (meth)acrylic acid are more preferable. Specific examples of these esterified compounds may include ω-methoxypolyoxyalkylenemethacrylate and ω-methoxypolyoxyalkyleneacrylate. Among these compounds, ω-methoxypolyoxyalkylenemethacrylate is more preferable.

When the polymer A' is obtained by using plural monomers 1 having different r, r represents an average of those of all polymers. For example, in the case where the polymer A' is obtained using $x_1$ mol% of a monomer obtained when $r = r_1$ and $x_2$ mol% of a monomer obtained when $r = r_2$, r is calculated from the following equation: $r = (r_1x_1 + r_2x_2)/(x_1 + x_2)$.

(Monomer 2)

In the monomer 2, $R^5$ to $R^7$ in the formula (2) respectively represent a hydrogen atom, a methyl group or $(CH_2)_5COOM^2$ which may be combined with $COOM^1$ or other $(CH_2)_5COOM^2$ to form an anhydride. In this case, $M^1$ and $M^2$ in these groups are not present. s denotes a number of 0 to 2. $R^5$ is preferably a hydrogen atom and $R^6$ is preferably a methyl group. $R^7$ is preferably a hydrogen atom or $(CH_2)_5COOM^2$.

$M^1$ and $M^2$ respectively represent a hydrogen atom, an alkali metal, an alkali earth metal, an ammonium group, an alkylammonium group, a substituted alkylammonium group, an alkyl group, a hydroxyalkyl group or an alkenyl group. $M^1$ and $M^2$ respectively preferably a hydrogen atom or an alkali metal.

Specific examples of the monomer 2 include monocarboxylic-based monomers such as (meth)acrylic acid and crotonic acid, dicarboxylic acid-based monomers such as maleic acid, itaconic acid and fumaric acid, or anhydrides or salts (for example, alkali metal salts, alkali earth metal salts, ammonium salts, mono, di, or trialkyl (2 to 8 carbon atoms) ammonium salts) or esters. Preferable examples of the monomer 2 include (meth)acrylic acids, maleic acid, malic acid anhydrides and more preferable examples of the monomer 2 include (meth)acrylic acids or alkali metal salts of these acids. The (meth) acrylic acid means an acrylic acid and/or an methacrylic acid (the same as follows).

The polymer A' may be produced, for example, by charging a reactor with water, the temperature of which is raised. In this reactor, the monomer 1 and the monomer 2 are reacted with each other in the presence of a chain transfer agent in a fixed molar ratio and weight ratio, followed by curing. After aged, the reaction product is neutralized according to the need.

The ratio (monomer 1/monomer 2) by weight of the monomer 1 to monomer 2 used for the production of the polymer A' is preferably 97/3 to 3/97, more preferably 95/5 to 5/95 and even more preferably 90/10 to 10/90.

In the polymer A', the average ratio ($Y_I$) by weight of the monomer 2 based on all monomers used to produce the polymer is preferably 1 to 30 (% by weight). The average weight ratio is represented by the formula: [Total amount of polymer 2/Total amount of all monomers used for the synthesis of the polymer A' ] $\times$ 100 (wt%). In order to widen the generality of the polymer A', it is preferable to use a polymer A'' produced in an average weight ratio ($Y_{II}$) different from that of the polymer A' together.

These polymers A' and A' ' are preferably selected such that a difference in the average weight ratios ($Y_I$) and ($Y_{II}$) is 2 or more. Though the polymer A' may be the same as or differ from the polymer A' ' in the types of polymers 1 and 2, it is preferable that the polymers A' and A'' use the same types of polymers 1 and 2.

Also, in the present invention, it is possible to use a copolymer mixture (hereinafter, referred to as a copolymer mixture (A), as the case may be) that is obtained by copolymerizing at least one type of monomer 1 with at least one type of monomer 2 wherein the ratio (monomer 1/monomer 2) by mol of the above monomer 1 to monomer 2 is changed at least once during the reaction. Such a copolymer mixture (A) can be produced by changing the ratio (monomer 1/monomer 2) by mol of the monomer 1 to monomer 2 to be added to the reaction system at least once during the reaction. At this time, a difference between the maximum value and minimum value of the ratio (monomer 1/monomer 2) by mol is preferably at least 0.05 and particularly in a range of 0.05 to 2.5.

The copolymer mixture (A) is obtained by reacting the above monomers 1 and 2 in a molar ratio (monomer 1/monomer 2) ranging preferably from 0.02 to 4. The molar ratio (monomer 1/monomer 2) is changed at least once during the reaction. Then, it is preferable in the present invention to use the copolymer mixture (A') obtained in the

average weight ratio ($X_{II}$) different from the average weight ratio ($X_I$) of the monomer 2 to the total monomers used to produce the copolymer mixture (A) together. Specifically, the copolymer mixture (A') is a copolymer mixture obtained by reacting the above monomer 1 with the monomer 2 in a molar ratio (monomer 1/monomer 2) ranging preferably from 0.02 to 4, wherein the molar ratio (monomer 1/monomer 2) is changed at least once during the reaction. The average weight ratio ($X_{II}$) of the monomer (A2) to all monomers used to produce the copolymer mixture (A') is different from the average weight ratio ($X_I$) of the copolymer mixture (A). The average weight ratio is given by the following equation: (Total amount of monomer (A2) /amount of all monomers) x 100 (wt%) and each of these average weight ratios is preferably in a range of 1 to 30 (wt%). It is to be noted that this average weight ratio is called "(A2)' average weight ratio" if necessary. Also, a difference between these average weight ratios ($X_I$) and ($X_{II}$) is preferably at least 0.1 (wt%), more preferably at least 0.5 (wt%) and even more preferably at least 1.0 (wt%). The polymer (A) may differ from the polymer A') in the types of polymers 1 and 2 as long as the average weight ratios (XI) and (XII) are different from each other. However, it is preferable that the polymers (A) and (A') use the same types of polymers 1 and 2.

Also, in the present invention, a polymer (hereinafter, referred to as a polymer A''') obtained using a compound represented by the formula (2) in which $M^1$ and $M^2$ are respectively an alkyl group (preferably having 1 to 3 carbon atoms), a hydroxyalkyl group (preferably having 2 to 5 carbon atoms) or an alkenyl group (preferably having 2 to 5 carbon atoms) may be used as the monomer 2 used to produce the polymer A'.

In this case, the structure and type of the monomer 1 used for the production of the polymer A''' are the same as those mentioned above.

In the production of the polymer A and especially the polymer A', other one or more copolymerizable monomers besides the above monomers 1 and 2 may be used. Examples of the other copolymerizable monomers include allylsulfonic acid, methallylsulfonic acid and

sulfoethylmethacrylate, and their alkali metal salts, alkali earth metal salts, ammonium salts or amine salts. (meth)acrylamides, N-methyl(meth)acrylamides, N,N-dimethyl(meth)acrylamides, 2-(meth)acrylamide-2-methasulfonic acid, 2-(meth)acrylamide-2-ethanesulfonic acid, 2-(meth)acrylamide-2-propanesulfonic acid, styrene and styrenesulfonic acid. Moreover, examples of the other copolymerizable monomers include polyamidepolyamine-based monomers obtained by adding an alkylene oxide having 2 to 4 carbon atoms to an amino residue of a polyamide polyamine obtained by the condensation between a polyalkylenepolyamine, a dibasic acid or an ester of a dibasic acid and a lower alcohol having 1 to 4 carbon atoms and an acrylic acid, a methacrylic acid or an ester of an acrylic acid or a methacrylic acid and a lower alcohol having 1 to 4 carbon atoms as described in the publication of JP No. 3336456, polyamidepolyamine-based monomers obtained by adding an alkylene oxide having 2 to 4 carbon atoms to an amino residue and an imino group of a polyamidepolyamine having an unsaturated bond which polyamine is obtained by reacting a polyalkylenepolyamine, a dibasic acid and/or an ester of a dibasic acid and an alcohol having 1 to 4 carbon atoms and a (meth)acrylic acid and/or an ester of a methacrylic acid and an alcohol having 1 to 4 carbon atoms as described in the publication of JP-A No. 2004-2174, an aminealkylene oxide adduct monomer as described in the publication of JP-A No. 2003-335563, a polyalkyleneiminealkylene oxide adduct monomer as described in the publication of JP-A No. 2004-342050 and a poly (polyoxyalkylene)type unsaturated monomer as described in the publication of JP-A No. 2004-67934. The total proportion of the monomers 1 and 2 is preferably 30 to 100 mol%, more preferably 50 to 100 mol%, even more preferably 75 to 100 mol% and even more preferably 90 to 100 mol% in all monomers.

As the polymer A and especially the polymer A', commercially available products may be used and specifically, the following products are typified. These products may be used in combinations of two or more.

Mighty 3000S, Mighty 3000H, Mighty 3000R, Mighty 21LV, Mighty 21VS, Mighty 21HF and Mighty 21HP manufactured by Kao Corporation, Aqualock FC600S and FC900 Aqualock manufactured by Nippon Shokubai Co., Ltd., MalialimAKM-60F, Malialim EKM-60K and Malialim Y-40 manufactured by Nippon Oil & Fats Co., Ltd., Reobuild SP series (8LS, 8LSR, 8N, 8S, 8R, 8SE, 8RE, 8SB-S, 8SB-M, 8SB-L, 8SB-LL, 8HE, 8HR, 8SV, 8RV), Reobuild 8000S, 8000E, 8000H, Glenium series (3030NS, 3400NV, 3000NS, 3200HES, 27, 51, 206, C301, C323, C315, ACE28, ACE30, ACE32, ACE38, ACE40, ACE48, ACE68, ACE327, ACE329, ACE338, SKY501, SKY503, SKY505, SKY528, SKY591, SKY592, SKY593, SKY910+, SP-8CR, SP-8CN, SP-8N, 8000, SP-8L) and Melflux 1641, 2453, 2424, 2500 manufactured by Degussa (company) , Sikament 1200N, 1100NT, 1100NTR, 1100NT-PWR, 1100NT-PSK, 2300, Sikament 686, Sika Viscocrete2100, Sika Viscocrete 4100, Sika Viscocrete 6100, Sika Viscocrete 20HE, Sikament 5370, Sika Viscocrete 3010, Sika Viscocrete 5-500, Sika Viscocrete 5-300, Sika Viscocrete 5 and Sika Viscocrete 20SL manufactured by Sika (company), Tuepole HP-8, Tuepole HP-11, Tuepole HP-8R, Tuepole HP-11R, Tuepole HP-11X, Tuepole SSP-104, Tuepole SSP-116, Tuepole HP70, Tuepole NV-G1 and Tuepole NV-G5 manufactured by Takemoto Oil & Fat Co. , Ltd. , Flowrick SF500S, Flowrick SF500SB, Flowrick SF500H, Flowrick SF500R and Flowrick 500RB manufactured by (k.k.) Flowrick, ADVA CAST 570, ADVA Flow 340, ADVA Flow 341, ADVA Flow 355, ADVA Flow 356, ADVA Flow 400, ADVA 100 Superplasticizer, ADVA 140, ADVA 170, ADVA 360, ADVA 370, ADVA Cast 500, ADVA Cast 530, ADVA Cast 540 and ADVA Cast 555 manufactured by GRACE (company), Sokalan series (HP80, 5009X, 5010X, DS3557, R401) manufactured by BASF (company) , Powerflow series (WR, HWR, SR) manufactured by Kyunggi (company) , Dynamon series and Mapeifluid series (Mapei) manufactured by Mapei (company) and Strucuro series manufactured by Fosroc

(company).

<Polymer B>

The polymer B is a phosphate-based polymer obtained by polymerizing the monomer 1 represented by the above formula (1) with a mixed monomer containing a monomer 3 represented by the following formula (3) and a monomer represented by the following formula (4).

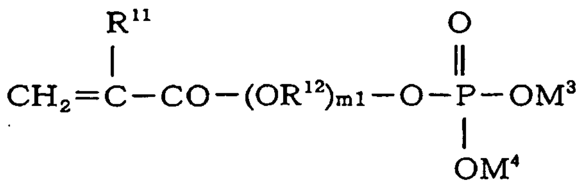 (3)

In the formula, $R^{11}$ represents a hydrogen atom or a methyl group, $R^{12}$ represents an alkylene group having 2 to 12 carbon atoms, m1 denotes a number of 1 to 30 and $M^3$ and $M^4$ respectively represent a hydrogen atom, an alkali metal or an alkali earth metal.

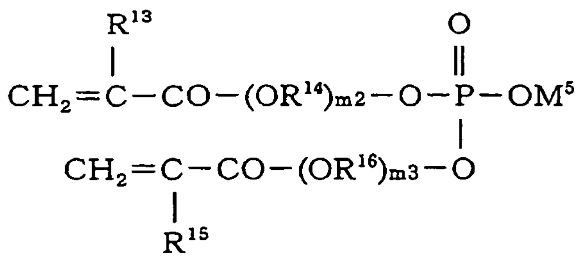 (4)

In the formula, $R^{13}$ and $R^{15}$ respectively represent a hydrogen atom or a methyl group, $R^{14}$ and $R^{16}$ respectively represent an alkylene group having 2 to 12 carbon atoms, m2 and m3 respectively denote a number of 1 to 30 and $M^5$ represents a hydrogen atom, an alkali metal or an alkali earth metal.

(Monomer 1)

As the monomer 1, those described in the polymer A' are used. With regard to the monomer 1 used for the production of the polymer B, $R^3$ in the formula (1) is preferably a hydrogen atom, AO is preferably an oxyalkylene group having 2 to 4 carbon atoms and more preferably contains an EO group, wherein the content of the EO group is preferably 70 mol% or more, more preferably 80 mol% or more, even more preferably 90 mol% or more and it is even more preferable that AO is all EO groups. AO forms an ether bond with $(CH_2)_q$ when p is 0 and an ester bond with $(CH_2)_q$ when p is 1. q is a number from 0 to 2 and preferably 0. Also, $R^4$ is preferably a hydrogen atom or an alkyl group having preferably 1 to 18, more preferably 1 to 12, even more preferably 1 to 4 and even more preferably 1 or 2 carbon atoms, and even more preferably a methyl group. Specific examples of the monomer 1 may include ω-methoxypolyoxyalkylenemethacrylate and ω-methoxypolyoxyalkyleneacrylate. Among these compounds, ω-methoxypolyoxyalkylenemethacrylate is more preferable. Here, r in the formula (1) is 3 to 300, preferably 4 to 120, more preferably 4 to 80 , even more preferably 4 to 50 and even more preferably 4 to 30 from the viewpoint of the dispersibility of the polymer in the hydraulic composition and viscosity reducing effect. The monomer 1 may be those containing different types of AO obtained by random addition, block addition or mixture of these additions in average r repeat units. The AO may contain a propylene oxy group besides the EO group.

The monomer 1 used for the production of the polymer B can be obtained, for example, by an esterification reaction of an alkoxypolyalkylene glycol with a (meth)acrylic acid (corresponding to a compound represented by the formula (2)). The amount of unreacted (meth) acrylic acid in the esterified product is preferably 5% by weight or less, more preferably 3% by weight or less, even more preferably 1.5% by weight or less and even more preferably 1% by weight or less based on the monomer 1 converted into an acid type from the viewpoint of its required amount and a reduction in viscosity when used as the dispersant of the present invention. Examples of a method that reduces the amount of (meth)acrylic acid left unremoved in the production of the monomer 1 include topping, steaming and solvent extraction.

(Monomer 3)

In the formula (3) of the monomer 3, $R^{11}$ is a hydrogen atom or a methyl group and $R^{12}$ is an alkylene group having 2 to 12 carbon atoms. m1 is a number from 1 to 30, and $M^3$ and $M^4$ are respectively a hydrogen atom, an alkali metal or an alkali earth metal. m1 in the formula (3) is preferably 1 to 20, more preferably 1 to 10 and even more preferably 1 to 5.

Examples of the monomer 3 include mono(2-hydroxyethyl)methacrylic acid phosphate, mono(2-hydroxyethyl)acrylic acid phosphate, polyalkylene glycol mono(meth) acrylate acid phosphate. Among these compounds, mono (2-hydroxyethyl)methacrylic acid phosphate is preferable from the viewpoint of production easiness and the stability of the product quality. The monomer 3 may be alkali metal salts, alkali earth metal salts, ammonium salts or alkylammonium salts of these compounds.

(Monomer 4)

In the formula (4) of the monomer 4, $R^{13}$ and $R^{15}$ respectively represent a hydrogen atom or a methyl group, $R^{14}$ and $R^{16}$ respectively represent an alkylene group having 2 to 12 carbon atoms, m2 and m3 respectively denote a number of 1 to 30 and $M^5$ represents a hydrogen atom, an alkali metal or an alkali earth metal. m2 and m3 in the formula (4) respectively denote a number preferably from 1 to 20, more preferably 1 to 10 and even more preferably 1 to 5.

Specific examples of the monomer 4 include di-[(2-hydroxyethyl)methacrylic acid] phosphate and di-[(2-hydroxyethyl)acrylic acid] phosphate. Among these compounds, di-[(2-hydroxyethyl)methacrylic acid] phosphate is preferable from the viewpoint of production easiness and the stability of the product quality. The monomer 4 maybe alkali metal salts, alkali earth metal salts, ammonium salts or alkylammonium salts of these compounds.

The monomers 3 and 4 may be blended to use these monomers as a monomer mixture. Also, as the monomers 3 and 4, a phosphate obtained by reacting an organic hydroxy compound represented by the formula (5) with a phosphatizing agent or a phosphorylating agent may be used.

The monomer mixture of the monomers 3 and 4 may be produced as a reaction product by reacting an organic hydroxy compound represented by the formula (5) with a phosphatizing agent in a giving charging ratio.

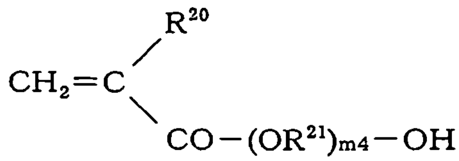

(5)

In the formula, $R^{20}$ represents a hydrogen atom or a methyl group, $R^{21}$ represents an alkylene group having 2 to 12 carbon atoms and m4 denotes a number from 1 to 30.

m4 in the formula (5) is preferably 1 to 20, more preferably 1 to 10 and even more preferably 1 to 5.

When a mixture of mono(2-hydroxyethyl)methacrylic acid phosphate and di-[(2-hydroxyethyl)methacrylic acid] phosphate is produced as the phosphate, it is synthesized by known technologies (for example, JP-A No. 57-180618).

As the monomer mixture containing the monomers 3 and 4, a commercially available product containing a monoester and a diester may be used. These products are available under the name of Phosmer M, Phosmer PE and Phosmer P (Unichemical), JAMP514, JAMP514P and JMP100 (all of these products are manufactured by Johoku Chemical Co., Ltd.), Light Ester P-1M, Light Acrylate P-1A (all of these products are manufactured by Kyoeisha Kagaku Kogyo) , MR200 (Daihachi Chemical Industry Co., Ltd.), Kayamer (NIppon Kayaku Co., Ltd.) and Ethyleneglycol methacrylate phosphate (Aldrich reagent).

The monomers 3 and 4 are phosphates of monomers having an unsaturated bond and a hydroxyl group and it has been confirmed that the above commercially available products and reaction products contain compounds other than a monoester (monomer 3) and a diester (monomer 4). Though polymerizable compounds and non-polymerizable compounds are considered to be mixed in these other compounds, such a mixture (monomer mixture) may be used as it is in the present invention.

The content of the monomers 3 and 4 in the monomer mixture can be calculated based on the results of $^{31}$P-NMR measurement.

<Condition of $^{31}$P -NMR measurement>

- Inverse-gated-decoupling method)
- Range of measurement: 6459.9 Hz
- Pulse delay time: 30 sec
- Observed data points: 10336
- Pulse width (5.833μsec) 35° pulse
- Solvent $CD_3OH$ (heavy methanol) (30% by weight)
- Number of integrated counts: 128

In this condition, the signals of the obtained chart are derived from the following compounds and thus it is possible to determine relative amount ratios from the area ratios.

For example, when the organic hydroxy compound is a phosphate of "2-hydroxyethylmethacrylate", it may be belonged to the following elements.

- 1.8 ppm to 2.6 ppm: Phosphoric acid
- 0.5 ppm to 1.1 ppm: Monomer 3 (monoester)
- -0.5 ppm to 0.1 ppm: Monomer 4 (diester)
- -1.0 ppm to -0.6 ppm: Triester
- -11.1 ppm to -10.9 ppm, -12.4 ppm to -12.1 ppm: Monopyrophosphosphate
- -12.0 ppm to -11.8 ppm: Dipyrophosphate
- -12.1 ppm to -11.1 ppm: Pyrophosphoric acid
- Other peaks: Undefined elements.

The content of phosphoric acid in the monomer mixture is measured quantitatively to find the content of the monomers 3 and 4. Specifically, it is calculated as follows.

The absolute amount (wt%) of the phosphoric acid's content in a sample is found by gas chromatography. From the results of P-NMR, the relative molar ratios of phosphoric acid, monomer 3 (hereinafter, referred to as monoester) as the case may be) and monomer 4 (hereinafter, referred to as a diester as the case may be) in the sample are found to calculate the absolute amount of the monoester and diester based on the absolute amount of the phosphoric acid.

(Content of phosphoric acid)

The condition of the gas chromatography is as follows. Sample: Methylated using diazomethane.

Example) 1 to 1.5 cc of a diethyl ether solution of diazomethane is added to 0.1 g of the sample to methylate.
Column: Ultra Alloy, 15 m × 0.25 mm (inner diameter) × 0.15 μmdf
Carrier gas: He, sprit ratio: 50:1

Column temperature: 40°C (5 min) (retention)→10°C/min (temperature is raised)→after the temperature reaches to 300°C, the sample is retained for 15 minutes.
Inlet temperature: 300°C
Detector temperature: 300°C

The peak derived from the phosphoric acid is detected after around 9 minutes in the above condition, whereby the content of the phosphoric acid in an undefined sample can be calculated according to a calibration curve method.

(Content of the monoester, diester)

Based on the content of the phosphoric acid calculated above, the total amount of the monoester and diester in the reagent used in Examples which will be described later is calculated in the following manner. In the calculation, decomposed products are taken as phosphoric acid and monoester, considering that monopyrophosphate, dipyrophosphate and pyrophosphoric acid are hydrolyzed in the polymerization process.

- Ethyleneglycol methacrylate phosphate (Aldrich reagent) : 86.4% by weight
- Phosmer M: 81.8% by weight
- Light ester P1M: 88.8% by weight

If the molar ratio of the monomers to be charged is calculated based on the details of the monoester and diester from the above results and the results of NMR, the molar ratios are as follows in the case of a production example of the polymer B-1 which will be described later.

- ω-methoxypolyethylene glycol monomethacrylate (trade name: NK Ester M230G, manufactured by Shin-Nakamura

Chemical Co. , Ltd. , ethylene oxide's added mole number: 23) = 30 mol%

- Mono (2-hydroxyethyl) methacrylic acid phosphate = 49 mol% Di-(2-hydroxyethyl)methacrylic acid phosphate = 21 mol%

Also, as the monomers 3 and 4, a phosphate (Y) obtained by reacting an organic hydroxy compound represented by the formula (5) with a phosphatizing agent may be used.

m4 in the formula (5) is preferably 1 to 20, more preferably 1 to 10 and even more preferably 1 to 5.

The phosphate (Y) is preferably one obtained by reacting the organic hydroxy compound with the phosphatizing agent in such a condition that the ratio defined by the following formula (I) is 2.0 to 4.0, preferably 2.5 to 3.5 and more preferably 2.8 to 3.2.

$$(A + B)/C \qquad (I)$$

A: The mole number of water in the phosphatizing agent including n($H_2O$) in the case of representing the phosphatizing agent as $P_2O_S$·n ($H_2O$)

B: The mole number of the organic hydroxy compounds

C: The mole number of the phosphatizing agents when the phosphatizing agent is converted into $P_2O_5$

In the formula (I) of the present invention, the phosphatizing agent is treated as $P_2O_5$·n ($H_2O$) for the sake of convenience.

Examples of the phosphatizing agent include orthophosphoric acid, phosphorous pentoxide (phosphoric acid anhydride), polyphosphoric acid and phosphorous oxychloride. Among these compounds, orthophosphoric acid and phosphorous pentoxide are preferable. These compounds may be used either alone or in combinations of two or more. The amount of the phosphatizing agent in the reaction of the organic hydroxy compound with the phosphatizing agent may be optionally determined corresponding to the intended composition of the phosphate.

As the phosphatizing agent, a phosphatizing agent (hereinafter, referred to as a phosphatizing agent (Z)) containing at least one type (Z-2) selected from the group consisting of phosphorous pentoxide (Z-1), water, phosphoric acid and polyphosphoric acid is preferable. In this case, in the formula (I) , the phosphatizing agent (Z) containing at least one type (Z-2) selected from the group consisting of phosphorous pentoxide (Z-1), water, phosphoric acid and polyphosphoric acid is treated as $P_2O_5$·n ($H_2O$) for the sake of convenience.

The mole number of the phosphatizing agents defined in the formula (I) shows the amount (mols) of a $P_2O_5$ unit derived from the phosphatizing agent, especially the phosphatizing agent (Z), to be introduced as starting material into the reaction system. Also, the mole number of water shows the amount (mol) of water ($H_2O$) derived from the phosphatizing agent (Z) to be introduced into the reaction system. Specifically, the water contains all waters existing in the reaction system including the waters contained when the polyphosphoric acid is represented by ($P_2O_5$·x$H_2O$) and the orthophosphoric acid is represented by (1/2($P_2O_5$·3($H_2O$)).

The temperature when adding the phosphatizing agent to the organic hydroxy compound is preferably 20 to 100°C and more preferably 40 to 90°C. Also, the time required to add the phosphatizing agent (time since the addition is started until the addition is completed) to the reaction system is preferably 0.1 hours to 20 hours and more preferably 0.5 hours to 10 hours.

The temperature of the reaction system after the phosphatizing agent is poured is preferably 20 to 100°C and more preferably 40 to 90°C.

After the phosphatizing reaction is finished, the produced condensates (organic compounds having a pyrophosphoric acid bond and phosphoric acid) of phosphoric acid may be reduced by hydrolysis or may be used as a monomer for producing the polymer B even if these condensates are not hydrolyzed.

The polymer B according to the present invention is a phosphate-based polymer obtained by copolymerizing the monomers 1, 3 and 4. It is preferable to use a monomer mixture containing the monomers 3 and 4.

Preferable compounds as the monomers 1, 3 and 4 are those described above. Also, the aforementioned commercially available products and reaction products may be used.

As to the molar ratio of the monomers 1 and 3 and 4, (monomer 1/ (monomer 3 + monomer 4) in the copolymerization of the monomers is preferably 5/95 to 95/5 and more preferably 10/90 to 90/10. Also, as to the molar ratio of the monomers 1, 3 and 4 (monomer 1/monomer 3/monomer 4) is preferably 5 to 95/3 to 90/1 to 80. This means 5 to 95 of monomer 1, 3 to 90 of monomer 3 and 1 to 80 of monomer 4, provided that the total of monomer 1,monomer 3 and monomer 4 is 100. It is more preferably 5 to 96/3 to 80/1 to 60. With regard to the monomers 3 and 4, each molar ratio and mol% are calculated based on the acid-based compounds, which is applied hereinafter.

In the production of the polymer B, the ratio of the monomer 4 in all monomers used for the reaction is designed

to be preferably 1 to 60 mol% and more preferably 1 to 30 mol%.

Also, the molar ratio (monomer 3/monomer 4) of the monomer 3 to the monomer 4 is preferably 99/1 to 4/96 and more preferably 99/1 to 5/95.

The pH of the monomer solution containing the monomer 3 and/or the monomer 4 is preferably designed to be 7 or less to use it in the reaction from the viewpoint of suppressing gelation.

More preferable production conditions will be explained from the viewpoint of limiting gelation and controlling preferable molecular weight and also from the viewpoint of performance design of the hydraulic composition dispersant. In light of this, a chain transfer agent is used in an amount of, preferably 4 mol% or more, more preferably 6 mol% or more and even more preferably 8 mol% or more based on the total mole number of the monomers 1, 3 and 4 in the copolymerization. Also, the upper limit of the amount of the chain transfer agent to be used is preferably 100 mol% or less, more preferably 60 mol% or less, even more preferably 30 mol% or less and even more preferably 15 mol% or less based on the total mole number of the monomers 1, 3 and 4. To state in more detail;

(1) when r of the monomer 1 is 3 to 30; and
(1-1) when the molar ratio of the monomers 3 and 4 to the sum of the monomers 1, 3 and 4 is 50 mol% or more, the chain transfer agent is used in an amount of, preferably, 6 to 100 mol% and more preferably 8 to 60 mol% based on the sum of the monomers 1, 3 and 4; and
(1-2) when the molar ratio of the monomers 3 and 4 to the sum of the monomers 1, 3 and 4 is less than 50 mol%, the chain transfer agent is used in an amount of, preferably, 4 to 60 mol% and more preferably 5 to 30 mol% based on the sum of the monomers 1, 3 and 4; and
(2) when r of the monomer 1 to be used in the polymer B exceeds 30, the chain transfer agent is used in an amount of, preferably, 6 to 50 mol% and more preferably 8 to 40 mol% based on the sum of the monomers 1 to 3.

The reaction of the monomers 3 and 4 is run at a target rate of, preferably, 60% or more, more preferably 70% or more, even more preferably 80% or more, even more preferably 90% or more and even more preferably 95% or more. The amount of the chain transfer agent to be used may be selected from the above point of view. Here, the reaction rate of the monomers 3 and 4 is calculated by the following equation.

$$\text{Reaction rate (\%)} = (1 - Q/P) \times 100$$

Q: Ratio of ethylenic unsaturated bonds of the monomers 3 and 4 to $R^4$ derived from the monomer 1 in the reaction system after the reaction is finished
P: Ratio of ethylenic unsaturated bonds of the monomers 3 and 4 to $R^4$ derived from the monomer 1 in the reaction system at the start of the reaction.

The ratios (mol%) of ethylenic unsaturated bonds of the monomers 3 and 4 in a phosphorous-containing compound in the reaction system at the start and end of the reaction may be calculated based on the result of the following $^1$H-NMR measurement.

(Condition of $^1$H-NMR)

A material obtained by drying the polymer B dissolved in water, under reduced pressure is dissolved in a concentration of 3 to 4% by weight in heavy methanol to measure $^1$H-NMR. The residual rate of ethylenic unsaturated bonds is measured by calculating an integral value in the range of 5.5 to 6.2 ppm. The measurement of $^1$H-NMR is performed using "Mercury 400 NMR) manufactured by Varian Company in the following condition: the number of data points: 42052, measurement range: 6410.3 Hz, pulse width: 4. 5μs, pulse waiting time: 10 S and measurement temperature: 25.0°C.

In the production of the polymer B, one or more other polymerizable monomers may be used besides the aforementioned monomers 1, 3 and 4. Examples of the other polymerizable monomer may include allylsulfonic acid, methallylsulfonic acid or alkali metal salts, alkali earth metal salts, ammonium salts or amine salts of any of these acids. Also, examples of the other polymerizable monomer may include acrylic acid monomers such as acrylic acid, methacrylic acid, crotonic acid, maleic acid, fumaric acid, itaconic acid and citraconic acid. The other polymerizable monomer may be alkali metal salts, alkali earth metal salts, ammonium salts, amine salts, methyl esters, maleic anhydride or anhydrous compounds of one or more of these acids. Examples of the other polymerizable monomer also include (meth)acrylamide, N-methyl(meth)acrylamide, N,N-dimethyl(meth)acrylamide, 2-(meth)acrylamide-2-methasulfonic acid, 2-(meth)acrylamide-2-ethanesulfonic acid, 2-(meth)acrylamide-2-propanesulfonic acid, styrene

and styrenesulfonic acid. Moreover, examples of the other copolymerizable monomers include polyamidepolyamine-based monomers obtained by adding an alkylene oxide having 2 to 4 carbon atoms to an amino residue of a polyamide polyamine obtained by the condensation between a polyalkylenepolyamine, a dibasic acid or an ester of a dibasic acid and a lower alcohol having 1 to 4 carbon atoms and an acrylic acid, a methacrylic acid or an ester of an acrylic acid or a methacrylic acid and a lower alcohol having 1 to 4 carbon atoms as described in the publication of JP No. 3336456, polyamidepolyamine-based monomers obtained by adding an alkylene oxide having 2 to 4 carbon atoms to an amino residue and an imino group of a polyamidepolyamine having an unsaturated bond which polyamine is obtained by reacting a polyalkylenepolyamine, a dibasic acid or an ester of a dibasic acid and a lower alcohol having 1 to 4 carbon atoms and a (meth)acrylic acid and/or an ester of a methacrylic acid and a lower alcohol having 1 to 4 carbon atoms as described in the publication of JP-A No. 2004-2174, an aminealkylene oxide adduct monomer as described in the publication of JP-A No. 2003-335563, a polyalkyleneiminealkylene oxide adduct monomer as described in the publication of JP-A No. 2004-342050 and a poly(polyoxyalkylene)type unsaturated monomer as described in the publication of JP-A No. 2004-67934. The total proportion of the monomers 1, 3 and 4 is preferably 30 to 100 mol%, more preferably 50 to 100 mol%, even more preferably 75 to 100 mol%, even more preferably 95 to 100 mol%, even more preferably 97 to 100 mol% and even more preferably 100 mol% in all monomers.

In the above case, the content of the monomer 2 represented by the above formula (2) in all monomers used to produce the polymer B is also preferably 20 mol% or less, more preferably 15 mol% or less and even more preferably 10% or less from the viewpoint of its required amount and a reduction in viscosity when used as the dispersant of the present invention.

In the production of the polymer B, the above monomers are copolymerized preferably in the presence of a predetermined amount of a chain transfer agent. Also, other copolymerizable monomers, an initiator and the like may be used.

The temperature of the reaction between the monomers 1, 3 and 4 is preferably 40 to 100°C and more preferably 60 to 90°C and the reaction pressure is preferably 101.3 to 111.5 kPa (1 to 1.1 atm) and more preferably 101.3 to 106.4 kPa (1 to 1.05 atm).

The pH of the reaction system can be adjusted by using inorganic acids (e.g., phosphoric acid, hydrochloric acid, nitric acid and sulfuric acid) and NaOH, KOH, triethanolamine and the like according to the need.

Here, a monomer solution containing the monomer 3 and/or the monomer 4 is preferably a water-containing system (specifically, the solvent contains water) in view of pH measurement. In the case of a nonaqueous system, a required amount of water may be added to carry out measurement. The pH of the monomer solution is preferably 7 or less, more preferably 0.1 to 6 and even more preferably 0.2 to 4.5 from the viewpoint of the uniformity of the monomer solution, prevention of gelation and restriction on a reduction in performances. Also, the monomer 1 is preferably used in the form of a monomer solution having a pH of 7. This pH is one measured at 20°C.

In the present invention, the pH of a reaction solution that is sampled during the course of the reaction (start of the reaction to the end of the reaction). It is preferable to start the reaction in such a condition that the pH of the solution during the reaction is clearly 7 or less (ratio of the monomers, solvent and other components) .

When the reaction system is a non-aqueous type, water may be added in a pH measurable amount to the reaction system to measure.

If the reaction of monomers 1, 3 and 4 is run in conditions shown in the following (1) and (2) in the method of producing the polymer B, it is considered that the pH in the reaction usually becomes 7 or less in consideration of other conditions.

(1) A monomer solution containing all the monomers 1, 3 and 4 and having a pH of 7 or less is used for the copolymerization reaction of the monomers 1, 3 and 4.

(2) The copolymerization reaction of the monomers 1, 3 and 4 is started at a pH of 7 or less. Specifically, after the reaction system containing the monomers 1, 3 and 4 is lowered to a pH of 7 or less, the reaction is started.

(Chain transfer agent)

The chain transfer agent is a material, which has the function of initiating a chain transfer reaction (a reaction in which polymer radicals that are under growing, are reacted with other molecules to cause radical active points to be transferred) and is added with the intention of transferring a chain unit. The chain transfer agent is preferably used in the polymerization from the viewpoint of limiting gelation, regulating a proper molecular weight and designing the performances of the hydraulic composition dispersant.

Examples of the chain transfer agent include thiol-based chain transfer agents and hydrocarbon halide-based chain transfer agents. Among these agents, thiol-based chain transfer agents are preferable.

As the thiol-based chain transfer agent, those having a -SH group and especially, those represented by the formula HS-R-Eg (wherein R represents a group derived from a hydrocarbon having 1 to 4 carbon atoms, E represents

-OH, -COOM, -COOR' or $-SO_3M$ group, where M represents a hydrogen atom, a monovalent metal, a divalent metal, an ammonium group or an organic amine group, R' represents an alkyl group having 1 to 10 carbon atoms and g denotes an integer from 1 to 2). Examples of the thiol-based chain transfer agent include mercaptoethanol, thioglycerol, thioglycolic acid, 2-mercaptopropionic acid, 3-mercaptopropionic acid, thiomalic acid, octyl thioglycolate and octyl 3-mercaptopropionate. Mercaptopropionic acid and mercaptoethanol are preferable and mercaptopropionic acid is more preferable from the viewpoint of a chain transfer effect in the copolymerization reaction of the system containing the monomers 1 to 3. One or two or more of these compounds may be used.

Examples of hydrocarbon halide-based chain transfer agent include carbon tetrachloride and carbon tetrabromide.

Examples of other chain transfer agents may include α-methylstyrene dimer, terpinolene, α-terpinene, v-terpinene, dipentene and 2-aminopropane-1-ol. These chain transfer agents may be used either alone or in combinations of two or more.

(Initiator)

In the method of producing the polymer B, it is preferable to use an initiator and particularly, the initiator is preferably used in an amount of, preferably, 5 mol% or more, more preferably 7 to 50 mol% and even more preferably 10 to 30 mol% based on the total mole number of the monomers 1, 3 and 4.

As an aqueous type initiator, ammonium persulfate or an alkali metal salt, hydrogen peroxide or aqueous azo compound such as 2,2'-azobis(2-amidinopropane)dihydrochloride and 2,2'-azobis(2-methylapropaneamide)dihydrate may be used. Also, a promoter such as sodium hydrogen sulfite or an amine compound may be used in combination with the initiator.

(Solvent)

In the production of the polymer B, a solution polymerization method may be carried out. Examples of the solvent used in this case include water or water-containing type solvents containing water and methyl alcohol, ethyl alcohol, isopropyl alcohol acetone, methyl ethyl ketone or the like. Water is preferable in consideration of handling characteristics and reaction equipment. In the case of using, particularly, a water-type solvent, the pH of the monomer solution containing the monomer 3 and/or the monomer 4 is preferably 7 or less, more preferably 0.1 to 6 and even more preferably 0.2 to 4 to run the copolymerization reaction in the point of the uniformity (handling characteristics) of the monomer mixture solution, the reaction rate of the monomers and from the viewpoint of limiting crosslinking by hydrolysis of a pyro-form of a phosphoric acid-based compound.

One example of the method of producing the polymer B will be explained. A reactor is charged with a predetermined amount of water, the atmosphere in the reactor is substituted with inert gas such as nitrogen and the temperature of the reactor is raised. A mixture obtained by mixing and dissolving the monomers 1, 3 and 4 and the chain transfer agent in water and a mixture obtained by dissolving the initiator in water are prepared in advance and are added dropwise in the reactor over 0.5 to 5 hours. At this time, each monomer, the chain transfer agent and the initiator may be added dropwise separately. Also, a method may be adopted in which a reactor is charged with a monomer mixture solution, to which only the initiator is added dropwise. Specifically, the chain transfer agent, the initiator and other additives may be added either as a additive solution separately from the monomer solution or by compounding them in the monomer solution. However, they are preferably supplied to the reaction system as the additive solution separately from the monomer solution in view of the stability of polymerization. In any case, the pH of the solution containing the monomer 3 and/or the monomer 4 is preferably 7 or less. Also, a copolymerization reaction is carried out with keeping a pH of, preferably, 7 or less by using an acid agent and the reaction solution is preferably aged for a predetermined time. In this case, the initiator may be added dropwise either in whole amount simultaneously with the monomers or in lots. It is, however, preferable to add the initiator in lots with the view of reducing unreacted monomers. For example, it is preferable to add the initiator in an amount 1/2 to 2/3 the total amount to be finally added simultaneously with the monomers and to add the remainder initiator in succession to curing for 1 to 2 hours after the dropwise addition of the monomers is finished. After the curing is finished, the cured solution is neutralized by an alkali agent (for example, sodium hydroxide) according to the need to obtain a phosphate-based polymer according to the need. This production example is preferable as the method of producing the polymer B according to the present invention.

The total amount of the monomers 1, 3 and 4 and other copolymerizable monomers is preferably 5 to 80% weight, more preferably 10 to 65% by weight and even more preferably 20 to 50% by weight.

The weight average molecular weight (Mw) of the polymer B is preferably 10,000 to 150,000. This polymer B has a Mw of 10,000 or more, preferably 12,000 or more, more preferably 13, 000 or more, even more preferably 14, 000 or more and even more preferably 15,000 or more from the viewpoint of dispersing effect and viscosity reducing effect, and 150,000 or less, preferably 130,000 or less, more preferably 120,000 or less, even more preferably 110,000

or less and even more preferably 100,000 or less from the viewpoint of suppressing an increase in molecular weight due to crosslinking and limiting gelation and from the viewpoint of improving the performances including a dispersing effect and viscosity reducing effect. The Mw of the polymer B is preferably 12,000 to 130,000, more preferably 13,000 to 120,000, even more preferably 14,000 to 110,000 and even more preferably 15,000 to 100,000 to satisfy the above both conditions. The polymer B preferably has a Mw falling in this range and a Mw/Mn of 1. 0 to 2.6. Here, the above Mn is a number average molecular weight.

Mw and Mn of the polymer B are values measured by a gel permeation chromatographic (GPC) method carried out in the following condition. It is to be noted that Mw/Mn of the phosphate-based polymer in the present invention is calculated based on the peaks of the polymer.

(Condition of GPC)

Column: G4000PWXL+G2500PWXL (Tosoh)
Eluent: 0.2 M phosphoric acid buffer/$CH_3CN$ = 9/1
Flow rate: 1.0 mL/min
Column temperature: 40°C
Detection: RI
Sample size: 0.2 mg/mL
Standard material: Based on polyethylene glycol

A phosphate-based polymer that meets the above requirement of Mw/Mn is considered to have a moderate branched structure so that it forms a structure in which absorbing groups densely exist in its molecule by limiting crosslinking due to the monomer 3 which is a diester. Also, if the degree of dispersion Mw/Mn is controlled in a specified range, molecules having the same sizes is near a monodisperse system and it is therefore possible to increase the amount of the polymer adsorbed to an adsorption-subject material (for example, cement particles). It is inferred that if the both are fulfilled, the adsorption-subject material such as cement particles can be closely packed with the polymer, which is effective to make compatible the dispersibility and viscosity-reducing effect. Mw/Mn may be controlled by regulating, for example, the amount of the chain transfer agent. When the amount of the chain transfer material is increased, Mw/Mn tends to be smaller.

Also, in the pattern of a chart showing the distribution of molecular weight which is obtained by a GPC method in the above condition, it is more preferable that the area of the distribution of molecular weights of 100,000 or more is 5% or less of the whole area in view of dispersibility (reduction in required amount) and viscosity-reducing effect.

The aforementioned Mw/Mn of the phosphate-based polymer according to the present invention as mentioned above is preferably 1.0 or more from the viewpoint of securing practical production easiness, dispersibility, viscosity-reducing effect and accommodation to material and temperature and preferably 2.6 or less, more preferably 2.4 or less, even more preferably 2.2 or less, even more preferably 2.0 or less and even more preferably 1.8 or less from the viewpoint of achieving the compatibility between dispersibility and viscosity-reducing effect. The Mw/Mn is preferably 1.0 to 2.4, more preferably 1.0 to 2.2, even more preferably 1.0 to 2.0 and even more preferably 1.0 to 1.8 taking all of the above two conditions into consideration.

<Hydraulic composition dispersant>

The dispersant of the present invention contains the polymer A and the polymer B. The compound ratio can be arbitrarily adjusted for the intended use. However, the ratio (polymer A/polymer B) by weight of the polymer A to the polymer B is preferably 95/5 to 5/95, more preferably 90/10 to 10/90 and even more preferably 80/20 to 20/80 with the view of achieving the compatibility between less temperature dependency and viscosity-reducing effect. Also, the ratio of the polymer A is preferably small and the ratio (polymer A/polymer B) is preferably 70/30 to 15/85, more preferably 60/40 to 15/85 and even more preferably 50/50 to 20/80, from the viewpoint of viscosity-reducing effect.

A polymer A' in which the total average added mole number r of AO of the monomer 1 is 3 to 100 is preferably used to further develop the viscosity-reducing effect while keeping the effect of reducing temperature dependency.

It is more preferable to use a polymer A' in which the total average added mole number r of AO of the monomer 1 is 50 to 300 to further obtain a fast-curing effect in addition to small temperature dependency and the viscosity-reducing effect.

Moreover, fluidity retentivity can be controlled by the copolymerization ratio of the polymer A (especially, the polymer A') and/or the polymer B. Specifically, the fluidity retentivity can be improved by increasing the content of the monomer 1 in the polymer A (especially, the polymer A') and/or the polymer B.

For example, as shown in Table 1, the polymers used in the present invention may be classified into four types of groups, a-1, a-2, b-1 and b-2 by the AO' s added mole number of the monomer 1 used in the polymer A' or B and by the molar ratio (mol%) of the monomer 2 or (sum of the monomers 3 and 4) based on the amount of all monomers to be charged from the viewpoint of developing fluidity retentivity. It is preferable to change the molar ratio of the monomer 2 (sum of the monomers 3 and 4) according to the AO's added mole number of the monomer 1 even in the same group. The a-1 and b-1 groups impart superior fluidity just after kneading even if the added amount is small and can mainly bear the function of reducing viscosity. The a-2 and b-2 groups imparts high fluidity with time and can mainly bear the function of bearing fluidity retentivity because good fluidity with time is obtained though these groups have a lower absorption rate to the hydraulic material than the a-1 and b-1 groups.

Table 1

| | Polymer A' | | | |
|---|---|---|---|---|
| added AO mole number of the monomer 1 <r> | 3 or more and less than 30 | 30 or more and less than 60 | 60 or more and not more than 300 | Group |
| Mol% of the monomer 2[1)] | 60 or more and not more than 97 | 65 or more and not more than 97 | 70or more and not more than 97 | a-1 group |
| | 3 or more and less than 60 | 3 or more and less than 65 | 3 or more and less than 70 | a-2 group |
| | | | | |
| | Polymer B | | | |
| added AO mole number of the monomer 1<r> | 3 or more and less than 30 | 30 or more and less than 60 | 60 or more and not more than 300 | Group |
| Mole% of the monomer 3+ monomer 4[2)] | 40 or more and not more than 95 | 50 or more and not more than 95 | 60 or more and not more than 95 | b-1 group. |
| | 5 or more and less than 40 | 5 or more and less than 50 | 5 or more and less than 60 | b-2 group |
| 1) Amount(mol%) of the monomer 2 to be charged based on the total amount of the monomers to be charged.<br>2) Amount (mole%) of the total amount of the monomers 3 and 4 to be charged based on the total amount of the monomers to be charged. | | | | |

When the polymer A' is selected from the a-1 group, the polymer B is preferably selected from the b-1 group from the viewpoint of the effect of more reducing viscosity. It is more preferable to use the polymer B selected from the b-2 group together from the viewpoint of reducing temperature dependency and improving fluidity retentivity.

When the polymer A' is selected from the a-2 group, the polymer B is preferably selected from the b-1 group from the viewpoint of viscosity-reducing effect and temperature dependency. It is more preferable to use the polymer B selected from the b-2 group together from the viewpoint of further improving fluidity retentivity.

The dispersant of the present invention is obtained, for example, by blending an aqueous solution containing the polymer A with an aqueous solution containing the polymer B. The dispersant preferably has a liquid state in view of workability.

The dispersant of the present invention is used in a ratio of, preferably, 0.02 to 1 part by weight and more preferably 0.04 to 0.4 parts by weight in terms of solid concentration of the polymer A and in a ratio of, preferably, 0.02 to 1 part by weight and more preferably 0.04 to 0.4 parts by weight in terms of solid concentration of the polymer B based on 100 parts by weight of the hydraulic powder with the view of achieving the compatibility between less temperature dependency and viscosity-reducing effect. The dispersant of the present invention may contain

other additives (materials). Examples of these additives include AE agents such as a resin soap, saturated or unsaturated fatty acid, sodium hydroxystearate, lauryl sulfate, alkylbenzenesulfonic acid (salt), alkane sulfonate, polyoxyalkylene alkyl(phenyl) ether, polyoxyalkylene alkyl(phenyl) ether sulfate (salt), polyoxyalkylene alkyl(phenyl) ether phosphate (salt), protein material, alkenylsuccinic acid and $\alpha$-olefin sulfonate; retardants such as an oxycarboxylic acid type, e.g., gluconic acid, glucoheptonic acid, arabonic acid, malic acid and citric acid, saccharide type such as monosaccharides, oligo saccharides and polysaccharides and sugar alcohol type; foaming agents; thickeners; silica sand; AE water reducing agents; early strengthening agents or promoters such as soluble calcium salts, e.g., calcium chloride, calcium nitrite,

calcium nitrate, calcium bromide and calcium iodide, chlorides, e.g., iron chloride and magnesium chloride, sulfates, potassium hydroxide, sodium hydroxide, carbonates, thiosulfates, formic acid (salt) and alkanolamine, hydroxide and sodium hydroxide; foaming agents; waterproof agents such as resinous acid (salt), fatty acid esters, fatty acids, silicone, paraffin, asphalt and wax; blast-furnace slag; fluidizing agents; antifoaming agents such as a dimethylpolysiloxane type, polyalkylene glycol fatty acid ester type, mineral oil type, fatty acid type, oxyalkylene type, alcohol type and amide type; foaming preventives; fly ash; high-performance water-reducing agents such as a melaminesulfonic acid formalin condensate type, aminosulfonic acid type and polymaleic acid type; silica fume; rust preventives such as nitrites, phosphates and zinc oxide; water-soluble polymers such as a cellulose type, e.g., methyl cellulose and hydroxyethyl cellulose, natural product type, e.g., β-1,3-glucan and xanthane gum and synthetic type, e.g., polyacrylic acid amide, polyethylene glycol and EO adducts of oleyl alcohol or reaction products of these EO adducts and vinylcyclohexenediepoxide; and emulsions of polymers such as alkyl(meth)acrylates. The total concentration of the polymers A and B is 0. 02 to 1% by weight and preferably 0. 04 to 0.4% by weight in the total solid of the dispersant.

<Hydraulic composition>

The hydraulic powder used in the hydraulic composition, which is to be the subject of the dispersant of the present invention, is a powder having such a property that it is cured by a hydration reaction and examples of the hydraulic powder include cements and gypsum. Preferable examples of the hydraulic powder include cements such as normal Portland cement, belite cement, moderate heat cement, early strength cement, super early strength cement and anti-sulfuric acid cement. Also, furnace slag, fly ash, silica fume, stone powder (calcium carbonate powder) or the like may be added to these cements. Hydraulic compositions, which are finally obtained by adding sand or sand and ballast as aggregates to these powders, are called mortar, concrete or the like. The dispersant of the present invention is useful in the fields of ready-mixed concrete and concrete vibration products and also in all other various concrete fields such as self-leveling concrete, frame retardant concrete products, plaster concrete, gypsum slurry concrete, light-weight concrete or heavy-weight concrete, AE concrete, repairing concrete, prepacked concrete, tremie concrete, grout concrete, foundation improvement concrete and concretes used in freezing weather.

The ratio of water/hydraulic powder (weight percentage of water/hydraulic powder (wt%) in the slurry, abbreviated as W/P in usual and as W/C when the powder is cement) in the hydraulic composition may be 65% by weight or less, preferably 10 to 60% by weight, more preferably 12 to 57% by weight, even more preferably 15 to 55% by weight and even more preferably 20 to 55% by weight. The dispersant of the present invention can be significantly produced even in such a formulation in which the unit water amount is small, for example 40% by weight or less.

Moreover, since the hydraulic composition containing the dispersant of the present invention is superior in viscosity-reducing effect and has stable fluidity retentivity, it has significantly high filling characteristics when it is filled in a form under vibration and is reduced in voids and air cells generated on the surface of cured concrete, which brings about the effect of improving the surface appearance of the concrete. In the present invention, a method of producing a concrete product is provided in which a hydraulic composition containing the dispersant of the present invention is filled in a form, molded, then cured and then released from the form. It is preferable to compact the hydraulic composition by a vibrator after the composition is filled in the form from the viewpoint of fully filling the hydraulic composition in the form. The fluidity of the hydraulic composition (ready-mixed concrete) used in this method preferably has a slump (JIS A 1101) of 1 cm to 23 cm and a slum flow value (JIS A 1150) of 30 cm to 75 cm.

BRIEF DESCRIPTION OF THE DRAWINGS

Fig. 1 is a schematic view of a torque tester and a recorder which are used to measure the viscosity of mortar in the evaluation of the examples and Fig. 2 is an equation showing the torque-viscosity relation of polyethylene glycol (weight average molecular weight: 20,000) which is used for calculation of the viscosity of mortar.

Examples

The followings are the examples of the present invention. These examples are described as to examples of the present invention and are not intended to be limited to the present invention.

Production Example 1 of a polymer A

A glass reactor (four-neck flask) equipped with a stirrer was charged with 246.4 g of water, the atmosphere in the reactor was substituted with nitrogen with stirring and the temperature of the water was raised to 56°C. A mixture of 148.8 g of ω-methoxypolyethylene glycol methacrylate (added mole number of ethylene oxide: 10), 39.2 g of methacrylic acid and 2.32 g of 3-mercaptopropionic acid and 43.3 g of an aqueous 5% ammonium persulfate solution were respectively

added dropwise to the water over 1.5 hours. Then, the mixture was cured at the same temperature (56°C) for 3 hours. After the curing of the mixture was finished, the mixture was neutralized to pH 6 by using 48% sodium hydroxide to obtain a polymer A-1 having a weight average molecular weight of 47000. Polymers A-2 and A-7 were produced in the same manner.

Production Example 2 of a polymer A

A glass reactor (four-neck flask) equipped with a stirrer was charged with 281.4 g of water, the atmosphere in the reactor was substituted with nitrogen with stirring and the temperature of the water was raised to 80°C. A solution prepared by dissolving 336.5 g of ω-methoxypolyethylene glycol methacrylate (added mole number of ethylene oxide: 120), 22.2 g of methacrylic acid and 1.89 g of 2-mercaptoethanol in 238.2 g water and a solution prepared by dissolving 3.68 g of ammonium persulfate in 45 g of water were respectively added dropwise to the water over 1.5 hours. In succession, a solution prepared by dissolving 1.47 g of ammonium persulfate in 15 g of water was added dropwise to the resulting mixture over 30 minutes, which was then cured at the same temperature (80°C) for 1 hour. After the curing of the mixture was finished, the mixture was neutralized by using 18.7 g of 48% sodium hydroxide to obtain a polymer A-3 having a weight average molecular weight of 76000. A polymers A-4 was produced in the same manner.

Production Example 3 of a polymer A

A glass reactor (four-neck flask) equipped with a stirrer was charged with 1053.1 g of water, the atmosphere in the reactor was substituted with nitrogen with stirring and the temperature of the water was raised to 78°C in a nitrogen atmosphere. A solution prepared by dissolving 884.5 g of ω-methoxypolyethylene glycol methacrylate (added mole number of ethylene oxide: 120), 28.1 g of methacrylic acid, 98.5 g of methylacrylate and 5.11 g of 2-mercaptoethanol in 526.5 g of water and a solution prepared by dissolving 11.18 g of ammonium persulfate in 63.4 g of water were respectively added dropwise to the water over 1.5 hours. In succession, a solution prepared by dissolving 3.73 g of ammonium persulfate in 21.1 g of water was added dropwise to the resulting mixture over 30 minutes, which was then cured at the same temperature (78°C) for 1 hour. After the curing of the mixture was finished, the mixture was neutralized by using 69.4 g of 20% sodium hydroxide to obtain a polymer A-5 having a weight average molecular weight of 81000.

Production Example 1 of a polymer B

A glass reactor (four-neck flask) equipped with a stirrer was charged with 218 g of water, the atmosphere in the reactor was substituted with nitrogen with stirring and the temperature of the water was raised to 80°C. A solution prepared by dissolving 55 g of ω-methoxypolyethylene glycol monomethacrylate (trade name: NK Ester M230G, manufactured by Shin-Nakamura Chemical Co., Ltd., added mole number of ethylene oxide: 23, content of methacrylic acid: 0% by weight), 32.3 g of a mixture (trade name: Phosmer M, manufactured by Unichemical (k.k.) of mono(2-hydroxyethyl) methacrylic acid phosphate ester and di-[(2-hydroxyethyl)methacrylic acid] phosphate ester and a solution prepared by dissolving 1.1 g of 3-mercaptopropionic acid in 55 g of water and a solution prepared by dissolving 3.8 g of ammonium persulfate in 43 g of water were respectively added dropwise to the water over 1.5 hours. After the mixture was cured for 1 hour, a solution prepared by dissolving 1.9 g of ammonium persulfate in 22 g of water was added dropwise to the resulting mixture over 30 minutes, which was then cured at the same temperature (80°C) for 1.5 hours. After the curing of the mixture was finished, the mixture was neutralized by using 40.1 g of a 20% sodium hydroxide solution to obtain a polymer B-1 having a weight average molecular weight of 51000 (Mw/Mn = 1.50). (pH at the time of polymerization: 0.9, coefficient of reaction: 100%). Polymers B-2, B-3 and B-5 were respectively produced in the same manner.

Production Example 2 of a polymer B

A glass reactor (four-neck flask) equipped with a stirrer was charged with 471 g of water, the atmosphere in the reactor was substituted with nitrogen with stirring and the temperature of the water was raised to 80°C. A mixture obtained by blending 290 g of ω-methoxypolyethylene glycol monomethacrylate (average added mole number of ethylene oxide: 9) (effective content: 84.4%, water content: 10%, content of methacrylic acid: 0.9% by weight based on ω-methoxypolyethylene glycol monomethacrylate), 93.8 g of a phosphate (A) and 11.3 g of 3-mercaptopropionic acid and a solution prepared by dissolving 8.2 g of ammonium persulfate in 46 g of water were respectively added dropwise to the water over 1.5 hours. After the mixture was cured for 1 hour, a solution prepared by dissolving 3.3 g of ammonium persulfate in 19 g of water was added dropwise to the resulting mixture over 30 minutes, which was then cured at the same temperature (80°C) for 1.5 hours. After the curing of the mixture was finished, the mixture was neutralized by using 58.2 g of a 32% sodium hydroxide solution to obtain a polymer B-4 having a weight average molecular weight of 25000 (Mw/Mn = 1.66). (pH at the time of polymerization of the monomer: 1.2, coefficient of reaction: 99%).

A phosphate (A) is one obtained by the following production method. A reactor was charged with 200 g of 2-hydroxyethylmethacrylate and 36.0 g of 85% phosphoric acid ($H_3PO_4$). 89.1 g of diphosphorous pentoxide ($P_2O_5$) was gradually added to the mixture with cooling the mixture such that the temperature did not exceed 60°C. After the addition was finished, the reaction temperature was set to 80°C to run the reaction for 6 hours and the reaction solution was cooled to obtain a phosphate (A).

Production Example 3 of a polymer B

A glass reactor (four-neck flask) equipped with a stirrer was charged with 180 g of water, 94 g of ω-methoxypolyethylene glycol monomethacrylate (trade name: NK Ester M230G, manufactured by Shin-Nakamura Chemical Co., Ltd., added mole number of ethylene oxide: 23, content of methacrylic acid: 0% by weight) and 8.8 g of sodium methallylsulfonate to dissolve. Then, 32.1 g of a mixture (Ethylene glycol methacrylate phosphate ester (Aldrich reagent) of mono(2-hydroxyethyl)methacrylic acid phosphate and di-[(2-hydroxyethyl)methacrylic acid] phosphate was added and an aqueous 30% sodium hydroxide solution was further added to the mixture. The mixture was adjusted to pH 8.5 by adding a sodium hydroxide solution. After the atmosphere in the reactor was substituted with nitrogen, the temperature of the system was raised to 60°C in the nitrogen atmosphere. A solution prepared by dissolving 1.8 g of ammonium persulfate in 43.2 g of water was added dropwise to the reaction solution over 1.0 hour. Then, the resulting reaction solution was cured at the same temperature (60°C) over 3.0 hours to obtain a polymer B-6 having a weight average molecular weight of 47000 (Mw/Mn = 1.85). (pH at the time of polymerization: 8.5, coefficient of reaction: 100%).

The molar ratio of monomers in the above production examples and the like are summarized in Tables 4 to 5.

<Evaluation 1>

Tests were performed in which dispersants obtained using the polymers A and B obtained as shown in Tables 6 and 7 above were respectively used in mortars having the formulation shown in Table 2 and in concretes having the formulation shown in Table 3. The results are shown in Tables 6 and 7. The evaluations of the viscosity of mortar, steam curing strength and fluidity retentivity were made using the following method.

(Mortar test)

(1) Formulation of mortar

Table 2

| Test formulation of mortar | | | |
|---|---|---|---|
| W/C (%) | Unit amount (kg/m$^3$) | | |
| | W | C | S |
| 40 | 160 | 400 | 700 |

The used materials in Table 2 are as follows. C: Normal cement (mixture of normal Portland cement manufactured by Taiheiyo Cement Corporation and normal Portland cement manufactured by Sumitomo Osaka Cement Co., Ltd. (1:1)).

W: Ion exchange water
S: Pit sand from Kimitsu, Ciba prefecture (3.5 mm-pass product)

(2) Preparation of a mortar

S was poured in an amount about 1/2 the amount shown in the formulation of Table 2, then C was poured and then the remainder S was poured into a container (1 L stainless beaker: inner diameter 120mm) and these components were dry-mixed using, as a stirrer, EYELA Z-2310 (manufactured by Tokyo Rikakikai, stirring rod: height 50 mm, inner diameter 5 mm × 6/length 110mm) at 200 rpm for 25 seconds. A mixed solution of a dispersant and water that were mixed in advance was poured over 5 seconds just after the dry-mixing was finished. After the mixed solution was poured, materials on the wall surface and in the space between the stirring rods were scraped off, water was poured and then

the mixture was kneaded for 3 minutes to prepare mortar. In this case the mortar was prepared such that the amount of air to be entrained was 2% or less by adding an antifoaming agent according to the need.

(3) Evaluation

(3-1) Viscosity

A 60-mm-high cone provided with an upper opening 70 mm in diameter and a lower opening 100 mm in diameter was used and the amount of the polymer was determined such that the mortar flow value was 190 to 210 mm. A recorder was connected to the torque tester shown in Fig. 1 to detect the torque applied to the mortar at this time and the viscosity of the mortar was calculated from the torque of the mortar based on the equation of the torque-viscosity relation which equation was made in advance by using polyethylene glycol (Mw: 20,000) as shown in Fig. 2. When the equation of the torque-viscosity relation of polyethylene glycol is made, a record of a torque output voltage (mV) is taken out from the recorder in the condition of a monitor output of 60 W and an output signal DC of 0 to 5 V. In this evaluation, the viscosity of the mortar is preferably 4000 mPa·s or less. It is to be noted that this mortar flow value 190 to 210 mm is an average of the maximum mortar flow value and a mortar flow value measured in a direction perpendicular to the direction in which the maximum value is obtained at a length 1/2 the segment giving the maximum value.

(3-2) Steam curing strength

The mortar prepared as above was filled in a form of 4 cm × 4 cm × 16 cm, which was allowed to stand at 20°C for one hour and was then placed in a steam curing vessel adjusted in advance to 70°C. After 4 hours, the form was taken out and was further allowed to stand at 20°C for one hour. The mortar was released from the form to measure its steam curing strength according to JIS A 1108.

(Concrete test)

(1) Formulation of concrete

The formulation of concrete is as shown in Table 3.

Table 3

| Formulation in concrete test | | | | |
|---|---|---|---|---|
| W/C (%) | Unit amount (kg/$m^3$) | | | |
| | W | C | S | G |
| 40 | 165 | 413 | 793 | 960 |

The used materials in Table 3 are shown below. C: Normal Portland cement (mixture of normal Portland cement manufactured by Taiheiyo Cement Corporation and normal Portland cement manufactured by Sumitomo Osaka Cement Co. , Ltd. (1:1)).

W: Ion exchange water
S: Fine aggregate, pit sand from Kimitsu, Ciba-ken
G: Coarse aggregate, lime aggregate from Choukeisan, Kochi prefecture

(2) Preparation of a concrete

Concrete was prepared using a forced two-shaft mixer manufactured by IHI in the following condition: concrete capacity: 30 little, stirring time, dry-mixing for 10 seconds, and 90 seconds after pouring kneading water. At this time, the amount of the copolymers to be added was controlled such that the slump flow value was 350 to 420 mm. It is to be noted that this slump flow value is an average of the maximum flow value and a flow value measured in a direction perpendicular to the direction in which the maximum value is obtained at a length 1/2 the segment giving the maximum value. The amount of the copolymers (effective wt% based on cement) necessary to obtain this slump flow value at a concrete temperature of 20°C (20 to 22°C) is shown in Table 6. The test for the slump flow of concrete was carried out according to JIS A 1150 (maximum dimension of coarse aggregates (G) : 20 mm, concrete temperature: 20 to 22°C,

sample packing method: the sample was packed in three separate layers, each layer was pricked evenly by a pricker 25 times). Also, the amount of air in concrete (JIS A 1128) was controlled such that the amount of air to be entrained was 3.5 to 5.5 vol% by adding an antifoaming agent and a AE agent. The amount of the copolymers at a concrete temperature of 10°C (10 to 12°C) was designed to be the same as in the case of the concrete test performed at 20°C.

(3) Fluidity retention ratio

The ratio of the concrete flow value after 15 minutes to the initial concrete flow value (just after stirring) of the concrete prepared above was defined as fluidity retention ratio (%). Here, the fluidity retention ratio was calculated by the following equation.

$$\text{Fluidity retention ratio (\%)} = (A/B) \times 100$$

A: Concrete flow value (mm) after 15 minutes - 200 (mm)
B: Concrete flow value (mm) just after stirring - 200 (mm)

(Since a slump cone having a lower inner diameter of 200 mm is used, 200 is subtracted from each of A and B)

If the value of the fluidity retention ratio is closer to 100, this means that the fluidity is not changed after 15 minutes. This fluidity retention ratio was measured at the concrete temperature of 20°C and 10°C respectively. If a difference (shown by an absolute value in the table) between the fluidity retention ratios measured at 20°C and 10°C is smaller, this means that a variation in the behavior of the fluidity retentivity as a function of temperature is small.

Table 4

| Polymer No. | Raw material to be charged | | | | | Mw |
|---|---|---|---|---|---|---|
| | Monomer 1 | Monomer 2-1 | Monomer 2-2 | Charging ratio(mol%) | | |
| | | | | Monomer 1 | Monomer 2 | |
| A-1 | MEPEG-E(10) | MAA | - | 38 | 62 | 47000 |
| A-2 | MEPEG-E(23) | MAA | - | 25 | 75 | 47000 |
| A-3 | MEPEG-E(120) | MAA | - | 20 | 80 | 76000 |
| A-4 | MEPEG-E(120) | MAA | - | 30 | 70 | 81000 |
| A-5 | MEPEG-E(120) | MAA | AA-Me | 10 | 20/70* | 81000 |
| A-6 | "Maliarim AKM-60F" manufacture by Nippon Oil & Fats Co/.Ltd. (copolymer of maleic acid /methoxypolyethylene glycol monoallyl ether) | | | | | 48000 |
| A-7 | MEPEG-E(5) | MAA | - | 54 | 46 | 35000 |
| * The charging ratio of the monomer 2 is the ratio of monomer 2-1/monomer 2-2. | | | | | | |

Table 5

| Polymer No. | Raw material to be charged | | | | | | | | pH during reaction | Mw | Mw/Mn |
|---|---|---|---|---|---|---|---|---|---|---|---|
| | Monomer 1 | Monomer 3 | Monomer 4 | Others | Charging ratio (mol%) | | | | | | |
| | | | | | Monomer 1 | Monomer3 | Monomer 4 | Others | | | |
| B-1 | MEPEG-E(23) | HEMA-MPE | HEMA-DPE | - | 30 | 49 | 21 | 0 | 0.9 | 51000 | 1.50 |
| B-2 | MEPEG-E(23) | HEMA-MPE | HEMA-DPE | - | 50 | 35 | 15 | 0 | 1.3 | 35000 | 1.46 |
| B-3 | MEPEG-E(9) | HEMA-MPE | HEMA-DPE | - | 50 | 35 | 15 | 0 | 1.1 | 32000 | 1.50 |
| B-4 | MEPEG-E(9) | HEMA-MPE | HEMA-DPE | - | 60 | 28 | 12 | 0 | 1.2 | 25000 | 1.21 |
| B-5 | MEPEG-E(23) | HEMA-MPE | HEMA-DPE | - | 70 | 21 | 9 | 0 | 1.5 | 36000 | 1.32 |
| B-6 | MEPEG-E(23) | HEMA-MPE | HEMA-DPE | Methallylsulfonic acid | 36 | 28 | 13 | 23 | 8.5 | 84000 | 2.83 |

The symbols in the table are as follows. In the table, numerals in the parenthesis are EO average added mole number.

- MEPEG-E: ω-methoxypolyethylene glycol monomethacrylate
- MAA: Methacrylic acid
- AA-Me: Methylacrylate
- HEMA-MPE: 2-Hydroxyethylmethacrylate monophosphate
- HEMA-DPE: 2-Hydroxyethylmethacrylate diphosphate
- Mw: Weight average molecular weight
- Mn: Number average molecular weight

Table 6

| | Type of polymer | | | | Compounding ratio (ratio by weight) | | Mortar test | Concrete test | | | |
|---|---|---|---|---|---|---|---|---|---|---|---|
| | | | | | | | Viscosity (20°C) | Added amount*** (%) | Fluidity retentivity(%) | | Difference of fluidity retention ratio (%) |
| | Polymer A (A1) | Polymer A (A2) | Polymer B (B1) | Polymer B (B2) | Polymer * A | Polymer** B | Mortar viscosity (mPa·s) | | 20°C (CT) | 10°C (CT) | |
| Comparative example 1 | A-2 | - | - | - | 100 | 0 | 3173 | 0.11 | 45 | 68 | 23 |
| Comparative example 2 | A-7 | - | - | - | 100 | 0 | 3875 | 0.24 | 116 | 150 | 34 |
| Comparative example 3 | A-2 | A-7 | - | - | 30/70 | 0 | 3417 | 0.18 | 75 | 100 | 25 |
| Comparative example 4 | | - | B-2 | B-5 | 0 | 70/30 | 2774 | 0.16 | 98 | 82 | 16 |
| Example 1 | A-2 | - | B-5 | - | 60 | 40 | 3224 | 0.16 | 95 | 92 | 3 |
| Example 2 | A-4 | - | B-2 | B-5 | 30 | 40/30 | 2803 | 0.18 | 100 | 92 | 8 |
| Example 3 | A-4 | - | B-2 | B-5 | 10 | 55/35 | 2788 | 0.17 | 102 | 91 | 11 |
| Example 4 | A-4 | A-5 | B-4 | B-5 | 30/10 | 30/30 | 3080 | 0.20 | 95 | 94 | 2 |
| Example 5 | A-6 | A-5 | B-4 | B-5 | 30/10 | 30/30 | 2914 | 0.18 | 95 | 96 | 1 |
| Example 6 | A-7 | - | B-3 | B-5 | 40 | 25/35 | 2812 | 0.20 | 98 | 92 | 6 |
| Example 7 | A-4 | - | B-6 | B-5 | 30 | 40/30 | 3751 | 0.25 | 95 | 90 | 5 |
| Example 8 | A-7 | - | B-1 | - | 85 | 15 | 3352 | 0.21 | 105 | 117 | 12 |

*The compounding ratio of the polymer A is (A1)/(A2).
**The compounding ratio of the polymer B is (B1)/(B2).
***Effective total content (% by weight) of the polymers A and B based on the concrete.

The smaller the difference in fluidity retention ratio is, the lower the temperature dependency is. The difference in fluidity retention ratio is preferably 15% or less and preferably 10% or less. The mortar viscosity is increased in the case of Example 7 because B-6 is contained as the polymer B and in the case of Examples 1 and 8 because the content A of the polymer is large.

Table 7

| | Polymer A (A1) | Polymer A (A2) | PolymerB | A/B* ratio by weight | Mortar viscosity (mPa·s) | Steam curing strength (N/mm$^2$) |
|---|---|---|---|---|---|---|
| Comparative example 5 | A-3 | - | - | 100/0 | 4048 | 14.1 |
| Comparative example 6 | A-1 | - | - | 100/0 | 2954 | 10.8 |
| Comparative example 7 | - | - | B-2 | 0/100 | 2774 | 12.8 |
| Comparative example 8 | A-3 | A-1 | - | (60/40)/0 | 3462 | 12.5 |
| Example 9 | A-3 | - | B-2 | 80/20 | 3632 | 14.0 |
| Example 10 | A-3 | - | B-2 | 60/40 | 3245 | 13.6 |
| * (60/40) in the ratio by weight of A/B is ((A1)/(A2)). | | | | | | |

<Evaluation 2>

Tests were performed in which dispersants obtained using the polymers A and B obtained as shown in Table 9 above were used in concrete having the formulation shown in Table 8. The results are shown in Table 9. The evaluation of the surface appearance of concrete was made using the following method.

(1) Formulation of concrete

Table 8

| W/C (%) | S/a (%) | Unit amount (kg/m$^3$) | | | |
|---|---|---|---|---|---|
| | | W | C | S | G |
| 38.0 | 40.0 | 152 | 400 | 686 | 1060 |

The used materials in Table 8 are as follows.

W: Tap water
C: Normal Portland cement (specific gravity: 3.16)
S: Fine sand, land sand from Kimitsu, Ciba prefecture (specific gravity:. 2.61)
G: Coarse aggregate, broken stone from Yura, Wakayama prefecture

(2) Preparation of a concrete

All materials were poured in the conditions of formulations shown in Table 8 and kneaded with a two-shaft mixer for 90 seconds. The concrete slump was adjusted to 8 cm to 12 cm by using the dispersants shown in Table 9. A fatty acid ester-based antifoaming agent (trade name: Foamlex 797, manufactured by Nikka Kagaku (company)) was added in an amount of 0.1% based on the dispersant.

(3) Evaluation

The prepared concrete was poured into a steel foam of length 10 cm × width 20 cm × height 20 cm and vibrated for 20 seconds by a table type vibrator (amplitude: 0.15 mm, 3300 vpm). The concrete was subjected to a steam curing process carried out in the following condition 2 hours after introduction: temperature rise rate: 18°C/hr, retention: 65°C × 4 hours, followed by allowing to cool. The concrete was released from the form 24 hours after the concrete was released. The state of voids and air cells on the surface of the sample of 10 × 20 × 20 cm = 4000 $cm^2$ was observed by naked eyes to rate the surface appearance of the surface of the concrete from an average of the four surfaces in the following manner. The results are shown in Table 9.

○: Air cells having a size of 3 mm or more are not observed.
Δ: The number of air cells having a size of 3 mm or more: 1 to 5.
×: The number of air cells having a size of 3 mm or more: 6 or more.

Table 9

| | Kind of polymer | | | | Compounding ratio (ratio by weight) | | Added amount*** (%) | Surface appearance |
|---|---|---|---|---|---|---|---|---|
| | Polymer A (A1) | Polymer A (A2) | Polymer B (B1) | Polymer B (B2) | Polymer * A | Polymer ** B | | |
| Example 11 | A-3 | - | B-2 | - | 30 | 70 | 0.21 | ○ |
| Example 12 | A-3 | A-4 | B-2 | B-5 | 45/25 | 25/5 | 0.19 | ○ |
| Example 13 | A-3 | A-5 | B-2 | - | 20/10 | 70 | 0.24 | ○ |
| Example 14 | A-3 | A-6 | B-2 | - | 20/10 | 70 | 0.22 | ○ |
| Comparative example 9 | A-1 | - | - | - | 100 | 0 | 0.22 | Δ |
| Comparative example 10 | A-3 | - | - | - | 100 | 0 | 0.19 | × |

* : The compounding ratio of the polymer A shows (A1) / (A2) .
** : The compounding ratio of the polymer B shows (B1) / (B2).
*** : Effective total content (% by weight) of the polymers A and B based on the concrete.

## Claims

1. A hydraulic composition dispersant comprising a polycarboxylic acid-based polymer A having a carboxylic acid group and a group selected from an oxyalkylene group and/or an oxystyrene group; and a polymer B obtained by copolymerizing a monomer 1 represented by the following formula (1), a monomer 3 represented by the following formula (3) and a monomer 4 represented by the following formula (4):

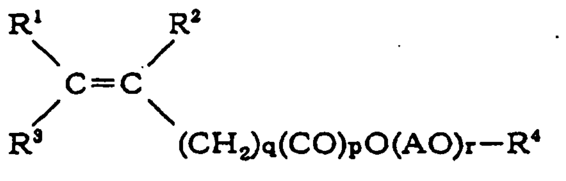

(1)

wherein $R^1$ and $R^2$ respectively represent a hydrogen atom or a methyl group, $R^3$ represents a hydrogen atom or $-(CH_2)_q(CO)_pO(AO)_rR^4$ where AO represents an oxyalkylene group having 2 to 4 carbon atoms or an oxystyrene group, p denotes a number of 0 or 1, q denotes a number of 0 to 2, r denotes an average number of the total AO units and denotes a number of 3 to 300 and $R^4$ represents an alkyl group having 1 to 18 carbon atoms;

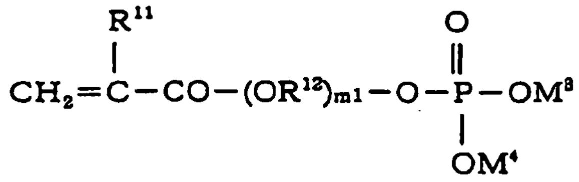

(3)

wherein $R^{11}$ represents a hydrogen atom or a methyl group, $R^{12}$ represents an alkylene group having 2 to 12 carbon atoms, m1 denotes a number of 1 to 30, $M^3$ and $M^4$ respectively represent a hydrogen atom, an alkali metal or an alkali earth metal;

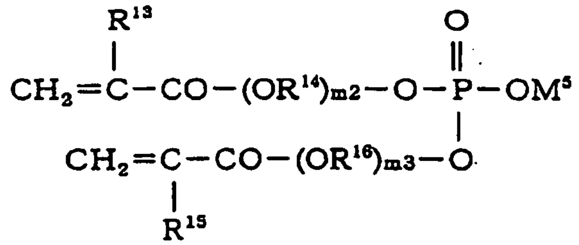

(4)

wherein $R^{13}$ and $R^{15}$ respectively represent a hydrogen atom or a methyl group, $R^{14}$ and $R^{16}$ respectively represent an alkylene group having 2 to 12 carbon atoms, m2 and m3 respectively denote a number of 1 to 30 and $M^5$ represents a hydrogen atom, an alkali metal or an alkali earth metal.

**2.** The hydraulic composition dispersant of Claim 1, wherein the polymer A is obtained by copolymerizing the monomer 1 represented by the formula (1) with the monomer 2 represented by the formula (2):

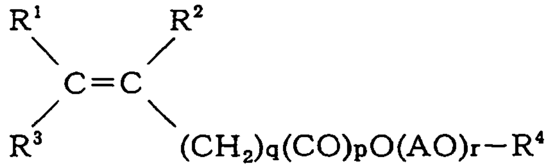

(1)

wherein $R^1$ and $R^2$ respectively represent a hydrogen atom or a methyl group, $R^3$ represents a hydrogen atom or - $(CH_2)_q(CO)_pO(AO)_rR^4$ where AO represents an oxyalkylene group having 2 to 4 carbon atoms or an oxystyrene group, p denotes a number of 0 or 1, q denotes a number of 0 to 2, r denotes an average number of the total AO units and denotes a number of 3 to 300 and $R^4$ represents an alkyl group having 1 to 18 carbon atoms;

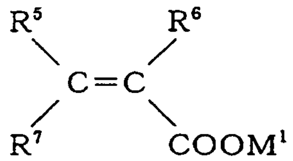

(2)

wherein $R^5$ to $R^7$ respectively represent a hydrogen atom, a methyl group or $(CH_2)_5COOM^2$ which may be combined with $COOM^1$ or other $(CH_2)_5COOM^2$ to form an anhydride and in this case, $M^1$ and $M^2$ in these groups are not present, s denotes a number of 0 to 2 and $M^1$ and $M^2$ respectively represent a hydrogen atom, an alkali metal, an alkali earth metal, an ammonium group, an alkylammonium group, a substituted alkylammonium group, an alkyl group, a hydroxyalkyl group or an alkenyl group.

**3.** The hydraulic composition dispersant of Claim 1 or 2, wherein the polymer B is obtained by copolymerizing the monomers 1, 3 and 4 at a pH of 7 or less.

**4.** The hydraulic composition dispersant of any one of Claims 1 to 3, wherein the polymer B is obtained by copolymerizing

the monomers 1, 3 and 4 in the presence of a chain transfer agent.

**5.** The hydraulic composition dispersant of Claim 4, wherein the chain transfer agent is used in an amount of 4 mol% or more based on the total mole number of the monomers 1, 3 and 4.

**6.** The hydraulic composition dispersant of any one of Claims 1 to 5, which comprises the polymer A and the polymer B at a ratio (polymer A/polymer B) by weight of 95/5 to 5/95.

**7.** The hydraulic composition dispersant of any one of claim 1 to 6, wherein the weight-average weight molecular weight (Mw) of polymer B is 12000 to 130000, the ratio (Mw/Mn) of the weight-average molecular weight (Mw) and the number-average molecular weight (Mn) is 1.0 to 2.6.

**8.** A hydraulic composition comprising a hydraulic powder, water and the hydraulic composition dispersant as claimed in any one of Claims 1 to 7.

**9.** A method of producing a concrete product, the method comprising filling the hydraulic composition as claimed in Claim 8 in a form, molding the composition and then releasing the product from the form.

**10.** Use of the dispersant as claimed in any one of Claims 1 to 7 for a hydraulic composition dispersant.

**Patentansprüche**

**1.** Dispergiermittel für eine hydraulische Zusammensetzung, umfassend
ein polycarbonsäurebasiertes Polymer A, das eine Carbonsäuregruppe und eine Gruppe, ausgewählt aus einer Oxyalkylengruppe und/oder einer Oxystyrolgruppe, aufweist; und
ein Polymer B, das durch Copolymerisieren eines Monomers 1 der nachstehenden Formel (1), eines Monomers 3 der nachstehenden Formel (3) und eines Monomers 4 der nachstehenden Formel (4) erhalten wird:

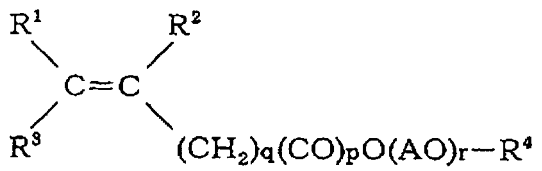
(1)

worin $R^1$ bzw. $R^2$ ein Wasserstoffatom oder eine Methylgruppe darstellen, $R^3$ ein Wasserstoffatom oder $-(CH_2)_q(CO)_pO(AO)_rR^4$ darstellt, worin AO eine Oxyalkylengruppe mit 2 bis 4 Kohlenstoffatomen oder eine Oxystyrolgruppe ist, p eine Zahl von 0 oder 1 bezeichnet, q eine Zahl von 0 bis 2 bezeichnet, r eine Durchschnittszahl der gesamten AO-Einheiten ist und eine Zahl von 3 bis 300 bezeichnet und $R^4$ eine Alkylgruppe mit 1 bis 18 Kohlenstoffatomen darstellt;

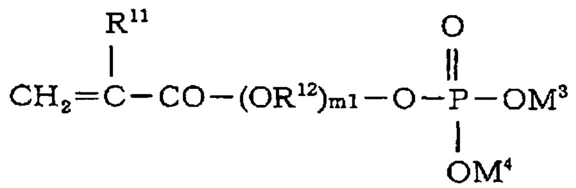
(3)

worin $R^{11}$ ein Wasserstoffatom oder eine Methylgruppe darstellt, $R^{12}$ eine Alkylengruppe mit 2 bis 12 Kohlenstoffatomen darstellt, m1 eine Zahl von 1 bis 30 bezeichnet, $M^3$ bzw. $M^4$ ein Wasserstoffatom, ein Alkalimetall oder ein Erdalkalimetall darstellen;

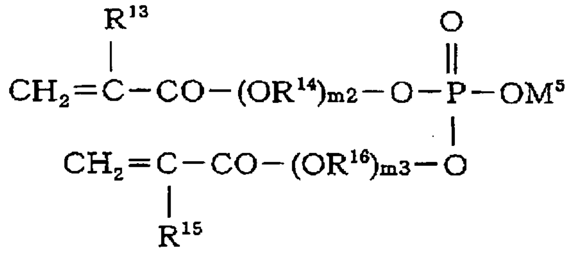

(4)

worin $R^{13}$ bzw. $R^{15}$ ein Wasserstoffatom oder eine Methylgruppe darstellen, $R^{14}$ bzw. $R^{16}$ eine Alkylengruppe mit 2 bis 12 Kohlenstoffatomen darstellen, m2 bzw. m3 eine Zahl von 1 bis 30 bezeichnen und $M^5$ ein Wasserstoffatom, ein Alkalimetall oder ein Erdalkalimetall darstellt.

**2.** Dispergiermittel für eine hydraulische Zusammensetzung gemäss Anspruch 1, wobei das Polymer A durch Copolymerisieren des Monomers (1) der Formel (1) mit dem Monomer (2) der Formel (2) erhalten wird:

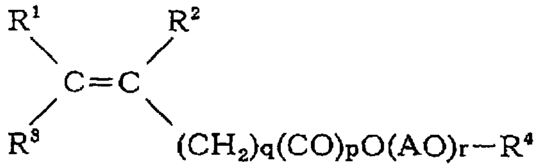

(1)

worin $R^1$ bzw. $R^2$ ein Wasserstoffatom oder eine Methylgruppe darstellen, $R^3$ ein Wasserstoffatom oder $-(CH_2)_q(CO)_pO(AO)_rR^4$ darstellt, worin AO eine Oxyalkylengruppe mit 2 bis 4 Kohlenstoffatomen oder eine Oxystyrolgruppe ist, p eine Zahl von 0 oder 1 bezeichnet, q eine Zahl von 0 bis 2 bezeichnet, r eine Durchschnittszahl der gesamten AO-Einheiten ist und eine Zahl von 3 bis 300 bezeichnet und $R^4$ eine Alkylgruppe mit 1 bis 18 Kohlenstoffatomen darstellt;

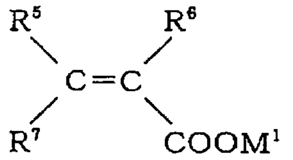

(2)

worin $R^5$ bis $R^7$ jeweils ein Wasserstoffatom, eine Methylgruppe oder $(CH_2)_5COOM^2$, das mit $COOM^1$ oder anderen $(CH_2)_5COOM^2$ kombiniert sein kann, um ein Anhydrid zu bilden, wobei in diesem Fall $M^1$ und $M^2$ in diesen Gruppen nicht vorhanden sind, darstellen, s eine Zahl von 0 bis 2 bezeichnet und $M^1$ bzw. $M^2$ ein Wasserstoffatom, ein Alkalimetall, ein Erdalkalimetall, eine Ammoniumgruppe, eine Alkylammoniumgruppe, eine substituierte Alkylammoniumgruppe, eine Alkylgruppe, eine Hydroxyalkylgruppe oder eine Alkenylgruppe darstellen.

**3.** Dispergiermittel für eine hydraulische Zusammensetzung gemäss Anspruch 1 oder 2, wobei das Polymer B durch Copolymerisieren der Monomere 1, 3 und 4 bei einem pH von 7 oder weniger erhalten wird.

**4.** Dispergiermittel für eine hydraulische Zusammensetzung gemäss irgendeinem der Ansprüche 1 bis 3, wobei das Polymer B durch Copolymerisieren der Monomere 1, 3 und 4 in Gegenwart eines Kettenübertragungsmittels erhalten wird.

**5.** Dispergiermittel für eine hydraulische Zusammensetzung gemäss Anspruch 4, wobei das Kettenübertragungsmittel in einer Menge von 4 mol-% oder mehr in bezug auf die Gesamtmolzahl der Monomere 1, 3 und 4 verwendet wird.

**6.** Dispergiermittel für eine hydraulische Zusammensetzung gemäss irgendeinem der Ansprüche 1 bis 5, die das Polymer A und das Polymer B in einem Gewichtsverhältnis (Polymer A/ Polymer B) von 95:5 bis 5:95 umfasst.

**7.** Dispergiermittel für eine hydraulische Zusammensetzung gemäss irgendeinem der Ansprüche 1 bis 6, wobei das

gewichtsgemittelte Molekulargewicht (Mw) des Polymers B 12.000 bis 130.000 beträgt, wobei das Verhältnis (Mw/Mn) von gewichtsgemitteltem Molekulargewicht (Mw) zu zahlengemitteltem Molekulargewicht (Mn) 1,0 bis 2,6 ist.

**8.** Hydraulische Zusammensetzung, umfassend ein hydraulisches Pulver, Wasser und das Dispergiermittel für eine hydraulische Zusammensetzung gemäss irgendeinem der Ansprüche 1 bis 7.

**9.** Verfahren zur Herstellung eines Betonprodukts, wobei das Verfahren das Einfüllen der hydraulischen Zusammensetzung gemäss Anspruch 8 in eine Form, Formen der Zusammensetzung und dann Freigeben des Produkts aus der Form umfasst.

**10.** Verwendung des Dispergiermittels gemäss irgendeinem der Ansprüche 1 bis 7 als Dispergiermittel für eine hydraulische Zusammensetzung.

## Revendications

**1.** Dispersant pour composition hydraulique comprenant un polymère à base d'acide polycarboxylique A ayant un groupe acide carboxylique et un groupe choisi parmi un groupe oxyalkylène et/ou un groupe oxystyrène ; et
un polymère B obtenu en copolymérisant un monomère 1 représenté par la formule (1) suivante, un monomère 3 représenté par la formule (3) suivante et un monomère 4 représenté par la formule (4) suivante :

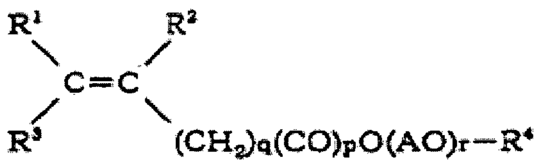

(1)

dans laquelle $R^1$ et $R^2$ représentent respectivement un atome d'hydrogène ou un groupe méthyle, $R^3$ représente un atome d'hydrogène ou $-(CH_2)_q(CO)_pO(AO)_rR^4$ où AO représente un groupe oxyalkylène ayant 2 à 4 atomes de carbone ou un groupe oxystyrène, p désigne un nombre égal à 0 ou 1, q désigne un nombre de 0 à 2, r désigne un nombre moyen du total de motifs AO et désigne un nombre de 3 à 300 et $R^4$ représente un groupe alkyle ayant 1 à 18 atomes de carbone ;

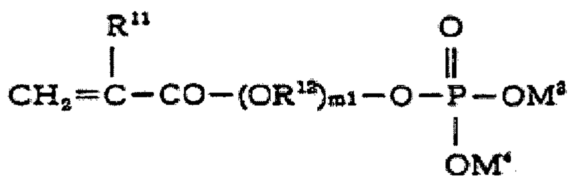

(3)

dans laquelle $R^{11}$ représente un atome d'hydrogène ou un groupe méthyle, $R^{12}$ représente un groupe alkylène ayant 2 à 12 atomes de carbone, m1 désigne un nombre de 1 à 30, $M^3$ et $M^4$ représentent respectivement un atome d'hydrogène, un métal alcalin ou un métal alcalino-terreux ;

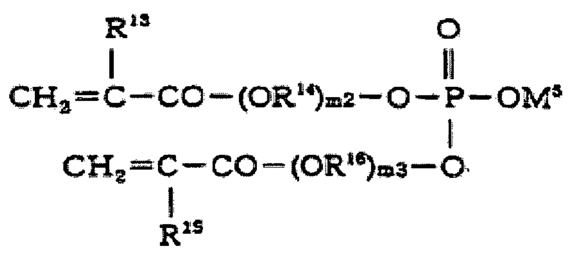

(4)

dans laquelle $R^{13}$ et $R^{15}$ représentent respectivement un atome d'hydrogène ou un groupe méthyle, $R^{14}$ et $R^{16}$ représentent respectivement un groupe alkylène ayant 2 à 12 atomes de carbone, m2 et m3 désignent respectivement un nombre de 1 à 30 et $M^5$ représente un atome d'hydrogène, un métal alcalin ou un métal alcalino-terreux.

**2.** Dispersant pour composition hydraulique selon la revendication 1, dans lequel le polymère A est obtenu en copolymérisant le monomère 1 représenté par la formule (1) avec le monomère 2 représenté par la formule (2) :

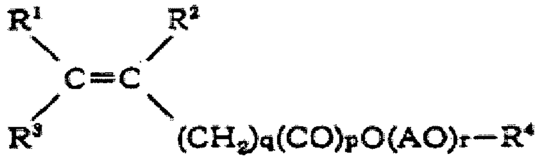
(1)

dans laquelle $R^1$ et $R^2$ représentent respectivement un atome d'hydrogène ou un groupe méthyle, $R^3$ représente un atome d'hydrogène ou $-(CH_2)_q(CO)_pO(AO)_rR^4$ où AO représente un groupe oxyalkylène ayant 2 à 4 atomes de carbone ou un groupe oxystyrène, p désigne un nombre égal à 0 ou 1, q désigne un nombre de 0 à 2, r désigne un nombre moyen du total de motifs AO et désigne un nombre de 3 à 300 et $R^4$ représente un groupe alkyle ayant 1 à 18 atomes de carbone ;

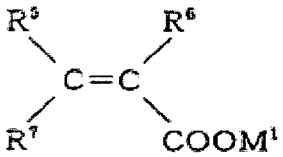
(2)

dans laquelle $R^5$ à $R^7$ représentent respectivement un atome d'hydrogène, un groupe méthyle ou $(CH_2)_5COOM^2$ qui peut être combiné à $COOM^1$ ou à un autre $(CH_2)_5COOM^2$ pour former un anhydride et dans ce cas, $M^1$ et $M^2$ dans ces groupes ne sont pas présents, s désigne un nombre de 0 à 2 et $M^1$ et $M^2$ représentent respectivement un atome d'hydrogène, un métal alcalin, un métal alcalino-terreux, un groupe ammonium, un groupe alkylammonium, un groupe alkylammonium substitué, un groupe alkyle, une groupe hydroxyalkyle ou un groupe alcényle.

**3.** Dispersant pour composition hydraulique selon la revendication 1 ou 2, dans lequel le polymère B est obtenu en copolymérisant les monomères 1, 3 et 4 à un pH de 7 ou moins.

**4.** Dispersant pour composition hydraulique selon l'une quelconque des revendications 1 à 3, dans lequel le polymère B est obtenu en copolymérisant les monomères 1, 3 et 4 en présence d'un agent de transfert de chaîne.

**5.** Dispersant pour composition hydraulique selon la revendication 4, dans lequel l'agent de transfert de chaîne est utilisé dans une quantité de 4 % en mol ou plus par rapport au nombre total de moles des monomères 1, 3 et 4.

**6.** Dispersant pour composition hydraulique selon l'une quelconque des revendications 1 à 5, qui comprend le polymère A et le polymère B à un rapport (polymère A/polymère B) en poids de 95/5 à 5/95.

**7.** Dispersant pour composition hydraulique selon l'une quelconque des revendication 1 à 6, dans lequel la masse moléculaire moyenne en masse (Mw) du polymère B est de 12 000 à 130 000, le rapport (Mw/Mn) entre la masse moléculaire moyenne en masse (Mw) et la masse moléculaire moyenne en nombre (Mn) est de 1,0 à 2,6.

**8.** Composition hydraulique comprenant une poudre hydraulique, de l'eau et le dispersant pour composition hydraulique tel que revendiqué dans l'une quelconque des revendications 1 à 7.

**9.** Procédé de production d'un produit de béton, le procédé comprenant le remplissage de la composition hydraulique telle que revendiquée dans la revendication 8 dans un moule, le moulage de la composition et la libération du produit du moule.

**10.** Utilisation du dispersant tel que revendiqué dans l'une quelconque des revendications 1 à 7 pour un dispersant pour composition hydraulique.

Fig. 1

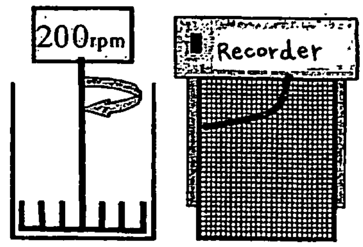
200rpm
Recorder

Fig. 2

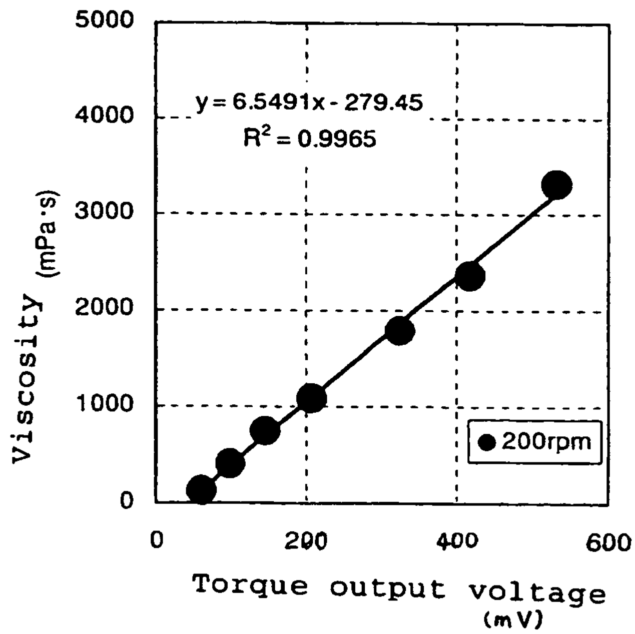
y = 6.5491x - 279.45
$R^2$ = 0.9965
5000
4000
3000
2000
1000
0
Viscosity (mPa·s)
● 200rpm
0
200
400
600
Torque output voltage (mV)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005118684 A
- JP 2004168635 A
- JP 2001316151 A
- JP 11079811 A
- JP 2000327386 A
- JP 3336456 B
- JP 2004002174 A
- JP 2003335563 A
- JP 2004342050 A
- JP 2004067934 A
- JP 57180618 A